# EUROPEAN PATENT APPLICATION

(11) **EP 2 784 702 A1**
(43) Date of publication of application: **01.10.2014**
(21) Application number: 14161794.4
(22) Date of filing: 26.03.2014
(51) Int. Cl.: G06F 17/30

(54) **Method for controlling dynamically changing contents of web page and electronic device thereof**

(30) Priority: 26.03.2013 KR 20130032112
(71) Applicant: Samsung Electronics Co., Ltd., Suwon-si Gyeonggi-do 443-742 (KR)
(72) Inventor: Kim, Kyung-Tae, Gyeonggi-do (KR); Lee, Chang-Ho, Gyeonggi-do (KR)
(74) Representative: Birchenough, Lewis

(57) **Abstract**

A method and electronic device for controlling dynamic content is disclosed, including: in response to detecting dynamic content in a web page, storing a portion of the dynamic content at a plurality of set time points, pausing updates of the dynamic content, and retrieving and displaying the portion of the dynamic content from one of the plurality of set time points.

## Description

### TECHNICAL FIELD

Certain embodiments of the present provide an electronic device and a method for controlling web content, for example for controlling dynamically changing content of a web.

### BACKGROUND

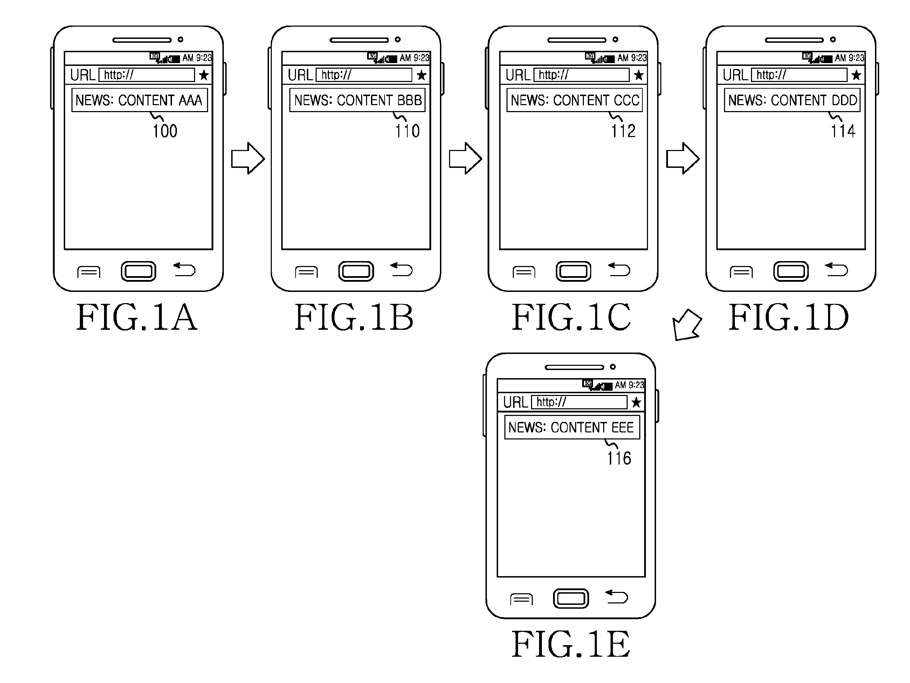

FIGS. 1A to 1E illustrate a scenario of dynamically changing a specific piece of content within a web page during a web browsing process.

Referring to FIGS. 1A to 1E, the contents of a main news page are changed and displayed every few seconds, as displayed in a "news" item 100 - 116 of a specific portal site. For example, a "news" item of one web page is circulated between "Content AAA" 100, "Content BBB" 110, "Content CCC" 112, "Content DDD" 114, and "Content EEE" 116. Thus, the contents of one "news" item are dynamically changed. Furthermore, the contents of multiple items may be dynamically changed and displayed within one web page.

When a user desires to view "Content AAA" 100, but "Content AAA" 100 has already passed, he/she has to wait until "Content AAA" 100 is re-displayed at the "news" item of the web page, as the web browser does not provide a separate controller for controlling the dynamically changing content. For example, when the user desires to view a news article corresponding to "Content AAA" 100 at a time point at which "Content CCC" 112 is being currently displayed at the "news" item, he/she has to wait until "Content AAA" 100 is re-displayed on the screen, after the news item has cycled through "Content DDD" 114 and "Content EEE" 116. In some cases, "Content AAA" 100 may not even be displayed again on the screen, and may instead be substituted with a new "Content FFF" (not shown).

### SUMMARY

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide a method and apparatus for controlling the dynamically changing contents of a web page in an electronic device.

Certain embodiments of the present invention provide a method and apparatus for controlling the dynamically changing contents of a web page in a web browser.

Certain embodiments of the present invention provide a method and apparatus for providing the desired content of a web page to a user, using a controller for pausing/playing the dynamically changing contents of the web page, returning to the previous content of the web page, and skipping to the next content of the web page.

Certain embodiments of the present invention provide a method and apparatus for preventing a user from missing dynamically changing contents of a web page in an electronic device.

Certain embodiments of the present invention provide a method and apparatus for controlling the dynamically changing contents of a web page in an electronic device.

According to one aspect of the present invention, there is provided a method of controlling dynamic content, the method comprising the steps of: in response to detecting an update of the dynamic content in a web page, storing at least a portion of the dynamic content at one or more set time points; in response to a pause command, pausing the dynamic content; and in response to a request, retrieving and displaying the at least the portion of the dynamic content from at least one of the one or more set time points.

The content may comprise any suitable type of content, for example text, images, video and the like. In certain exemplary embodiments, the dynamic content may comprise content that changes over time. For example, the dynamic content may comprise a plurality of items of content (e.g. images, videos and/or text items) that are sequentially displayed over time. The at least a portion of the dynamic content may comprise one or more of the plurality of items of content. Pausing the dynamic content may comprise causing the dynamic content to stop changing.

According to another aspect of the present invention, there is provided an electronic device for controlling dynamic content, the electronic device comprising: a display configured to display a webpage containing the dynamic content; and a processor configured to: in response to detecting an update of the dynamic content in the web page, store at least a portion of the dynamic content at one or more set time points; in response to a pause command, pause the dynamic content; and in response to a request, retrieve and display on the display the at least the portion of the dynamic content from at least one of the one or more set time points.

According to another aspect of the present invention, a method for controlling a display of dynamic contents within a web page in an electronic device is provided. The method comprises the steps of: when the dynamic contents are included within the web page, storing the content of a data structure corresponding to the web page at a set time point; and when an event of reading out the content of the data structure corresponding to the web page of a specific time point takes place, reading out and displaying the stored content of the data structure corresponding to the web page.

According to another aspect of the present invention, there is provided a method (e.g. a method for an electronic device), the method comprising the steps of: in accordance with a first instruction of a web browser, receiving a request for display of a specific content within a currently displayed web page, wherein a data structure for rendering the web page is stored in a memory; and displaying the web page including the specific content using the changed content of the data structure corresponding to the web page including the specific content.

According to a further aspect of the present invention, there is provided an electronic device comprising: one or more processors for executing computer programs; a memory for storing data, instructions and one or more programs configured to be executed by the one or more processors. The one or more programs comprise instructions which when executed implement a method comprising the steps of: when dynamic contents are included within a web page, storing the content of a data structure corresponding to the web page at a set time point; and when an event of reading out the content of the data structure corresponding to the web page of a specific time point takes place, reading out and displaying the stored content of the data structure corresponding to the web page.

According to a yet another aspect of the present invention, there is provided a method (e.g. an operation method of an electronic device), the method comprising the steps of: displaying a web page, wherein a data structure for rendering the web page is stored in a memory; when there are contents changing according to a specific period within the web page, storing the changed content of the data structure loaded from the memory; and, when an event of controlling a display of the changing content within the web page occurs, displaying the web page including content corresponding to the event, using the recorded changed content of the data structure.

According to a still another aspect of the present invention, there is provided an electronic device comprising: one or more processors for executing one or more computer programs; a memory for storing data, instructions and one or more programs configured to be executed by the one or more processors. The one or more program comprise instructions which when executed, implement a method comprising the steps of: in accordance with a first instruction of a web browser, receiving a request for a display of a specific content within a currently displayed web page, wherein a data structure for rendering the web page is stored in a memory; and displaying the web page including the specific content using the changed content of the data structure corresponding to the web page including the specific content.

According to a still another aspect of the present invention, there is provided an electronic device comprising: one or more processors for executing one or more computer programs; a memory for storing data, instructions and one or more programs configured to be executed by the one or more processors. The one or more programs comprise instructions which when executed implement a method comprising the steps of: displaying a web page, wherein a data structure for rendering the web page is stored in a memory; when there are contents changing according to a specific period within the web page, storing the changed content of the data structure loaded from the memory; and, when an event of controlling a display of the changing content within the web page occurs, displaying the web page including content corresponding to the event, using the recorded changed content of the data structure.

In accordance with another aspect of the present invention, there is provided a method for displaying a specific content within a web page in an electronic device, the method comprising the operations of: in accordance with a 1st instruction of a web browser, receiving a request for a display of a specific content within a currently displayed web page, a data structure for rendering the web page being stored in a memory; and displaying the web page comprising the specific content, using the changed content of the data structure corresponding to the web page comprising the specific content.

The skilled person will appreciate that, in certain exemplary embodiments, any operation, step or process performed by a processor executing a computer program may alternatively be performed by a hardware module adapted, configured and/or arranged for performing a corresponding operation.

Another aspect of the present invention provides a computer program comprising instructions arranged, when executed, to implement a method, system and/or apparatus in accordance with any aspect, embodiment and/or claim disclosed herein. A further aspect of the present invention provides a machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain exemplary embodiments and aspects of the present invention will become more apparent from the following detailed description when taken in conjunction with the accompanying drawings in which:
FIG. 1 is a diagram illustrating a scenario of dynamically changing a specific content within a web page during a web browsing process;
FIG. 2 is a diagram illustrating a dynamic change of specific content within a web page during web browsing according to an example embodiment of the present invention;
FIG. 3A is a diagram illustrating a toolbar of a web browser for controlling a display of the dynamically changing contents of a web page according to an example embodiment of the present invention;
FIG. 3B is a diagram illustrating a selection menu of a web browser for controlling a display of the dynamically changing contents of a web page according to an example embodiment of the present invention;
FIG. 3C is a diagram illustrating a toolbar of a web browser for controlling a display of the dynamically changing contents of a web page according to an example embodiment of the present invention;
FIG. 3D is a diagram illustrating a selection menu of a web browser for controlling a display of the dynamically changing contents of a web page according to an example embodiment of the present invention;
FIG. 4 is a diagram illustrating elements of a web browser according to an example embodiment of the present invention;
FIG. 5 is a diagram illustrating an operation process of a web rendering engine according to an example embodiment of the present invention;
FIG. 6A is a diagram illustrating an operation process of a web browser according to an example embodiment of the present invention;
FIG. 6B is a diagram illustrating a relationship between a data structure of a document and a memory and an application program according to an example embodiment of the present invention;
FIGS. 7A to 7D are diagrams illustrating timing for recording of information about dynamically changing content of a web page and displaying the dynamically changing content of the web page according to the an example embodiment of the present invention;
FIGS. 8A and 8B are diagrams illustrating timing for recording of information about the dynamically changing content of a web page and displaying the dynamically changing contents of the web page according to an example embodiment of the present invention;
FIGS. 9A and 9B are diagrams illustrating timing for recording of information about dynamically changing content of a web page and displaying the dynamically changing content of the web page according to an example embodiment of the present invention;
FIGS. 10A to 10C are diagrams illustrating a changing of specific content of a web page according to an example embodiment of the present invention;
FIG. 11 is a diagram illustrating recording information about a flash video played within a web page according to an example embodiment of the present invention;
FIG. 12 is a diagram illustrating recording information about a location change of content on a screen caused by scrolling within a web page according to an example embodiment of the present invention;
FIG. 13 is a flowchart illustrating an examples sequence of steps for controlling a display of the dynamically changing contents of a web page according to the first example embodiment of the present invention;
FIG. 14 is a flowchart illustrating an example sequence of steps for controlling display of dynamically changing content of a web page according to the second example embodiment of the present invention;
FIG. 15 is a block diagram illustrating one example implementation of an electronic device according to an example embodiment of the present invention; and
FIG. 16 is a flowchart illustrating an example sequence of steps for controlling a display of the dynamically changing contents of a web page according to an example embodiment of the present invention.

### DETAILED DESCRIPTION

Exemplary embodiments of the present invention will be described herein below with reference to the accompanying drawings. The following description of exemplary embodiments of the present invention, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention, as defined by the appended claims.

The same or similar components may be designated by the same or similar reference numerals although they may be illustrated in different drawings.

In the following description, detailed descriptions of well-known processes, operations, functions, structures, constructions, elements, features or implementations may be omitted for clarity and conciseness, and to avoid obscuring the subject matter of the present invention.

And, terms described below, which are defined considering functions in exemplary embodiments of the present invention, can be different depending on user and operator's intention or practice. Therefore, the terms should be defined on the basis of the disclosure throughout this specification.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context dictates otherwise. Thus, for example, reference to "an object" includes reference to one or more of such objects.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

The present disclosure describes a method and apparatus for controlling dynamically changing content of a web page in an electronic device executing a web browser.

Particularly, change of specific content within a web page is achieved by performing re-configuring the layout by altering the locations, size, attributes, etc. of objects (or elements or nodes) of a data structure tree (e.g., Document Object Model or "DOM" tree) or render tree for source code corresponding to the web page.

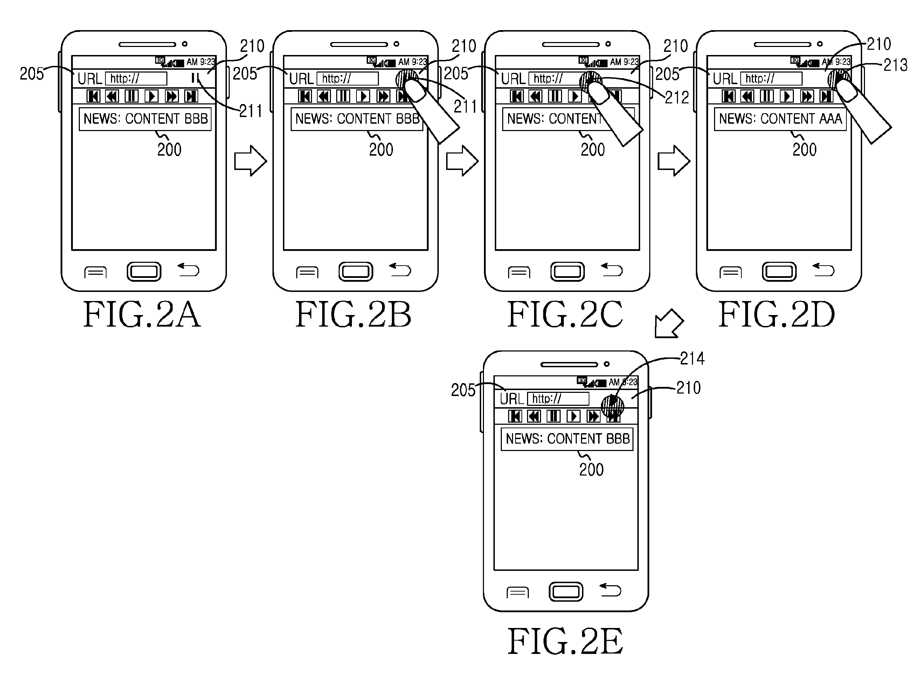

FIGS. 2A to 2E illustrate a scenario of dynamically changing specific content within a web page during web browsing, according to an example embodiment of the present invention.

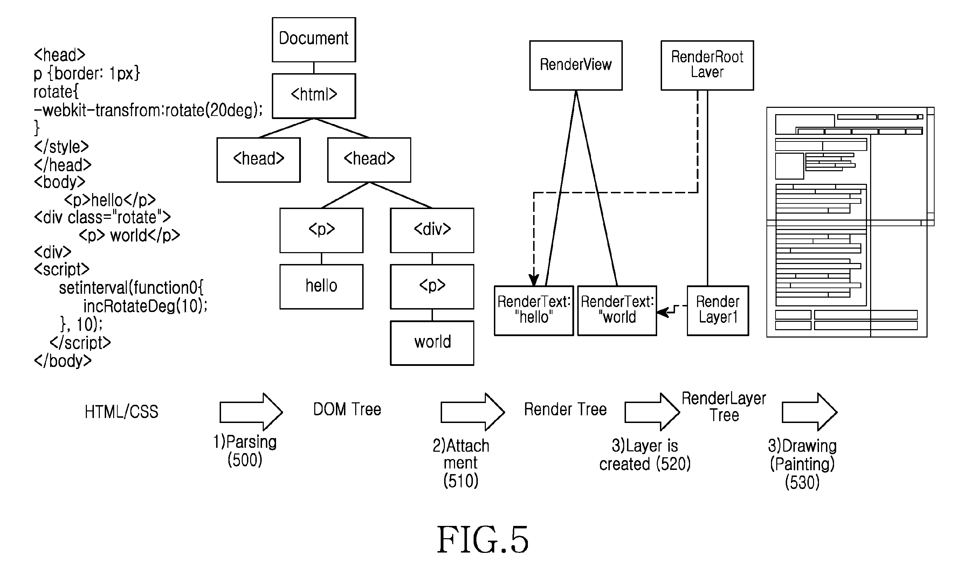

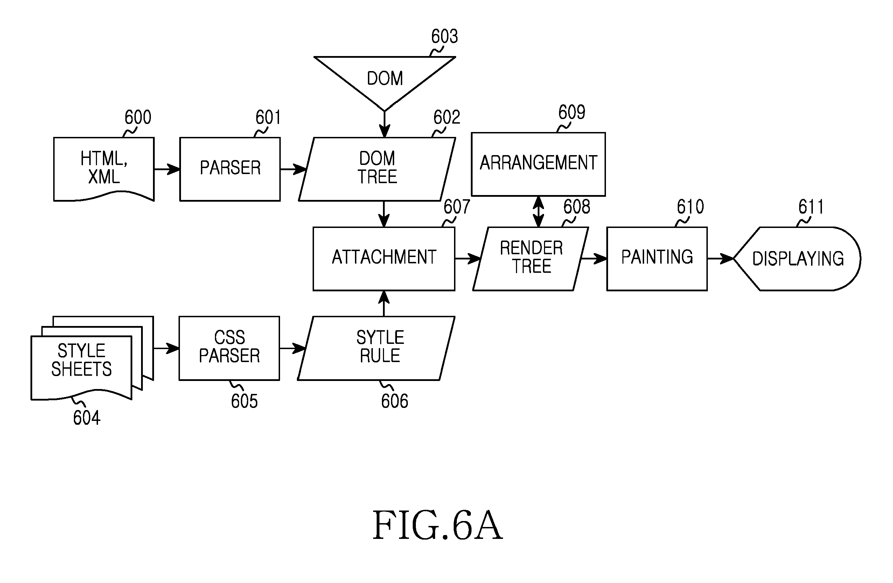

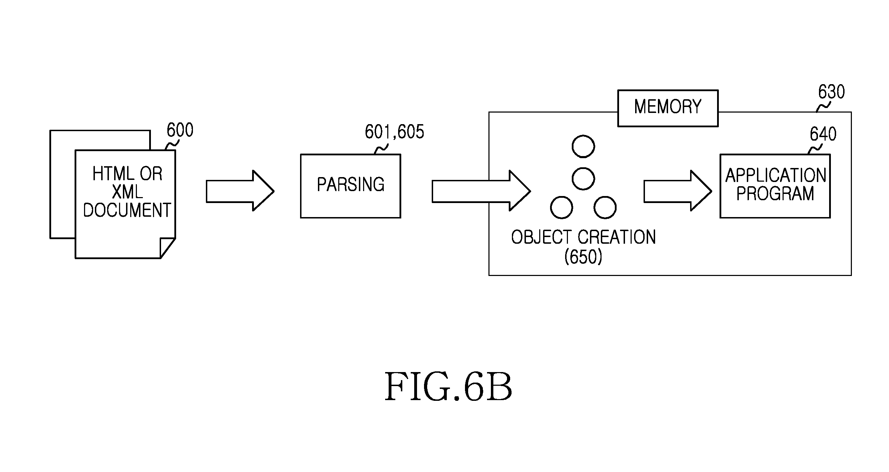

Referring to FIGS. 2A to 2E, the contents of main news are changed and displayed every seconds at a "news" item of a specific portal site. For example, assume that a "news" item 200 of one web page is circulated through "Content AAA", "Content BBB", "Content CCC", "Content DDD", and "Content EEE". At this time, when "Content AAA", "Content BBB", "Content CCC", "Content DDD", and "Content EEE" are dynamically changed within the web page, information about a DOM tree structure or render tree structure for rendering the web page is recorded. This is described below in detail in FIG. 5 and FIGS. 6A and 6B. Although FIGS. 2A to 2E illustrates a case where the contents of one "news" item are dynamically changed within a web page, the present invention is not limited to one "news" item, and is undoubtedly applicable even to a case where the contents of multiple items are dynamically changed within the web page.

As in FIG. 2A, when at least some contents of the web page displayed on a screen of an electronic device are circulated through "Content AAA", "Content BBB", "Content CCC", "Content DDD", and "Content EEE", a control menu 210 for pausing the dynamic change of the contents of the web page is displayed in a toolbar 205 of a web browser.

In one example, "Content BBB" may be displayed as the current "news" item 200, and the control menu 210 is displayed, as shown in FIG. 2B. The control menu 210 includes a control button 211 for pausing "Content BBB" currently displayed at the "news" item 200. Thus, when the control button 211 is touched by a user, the dynamically changing "news" item is paused. Although "Content CCC", "Content DDD", "Content EEE", and "Content AAA" 202 do not appear after "Content BBB" 200 is displayed, information about a DOM tree structure or render tree structure corresponding to the dynamically changing content is recorded (such as "Content CCC", "Content DDD", "Content EEE", and "Content AAA" 202).

As illustrated in FIGS. 2C and 2D, if the pause control button 211 is triggered or touched (and the circulation of web page content is paused), a number of other control buttons may be created and displayed. For example, a control button 212 may be displayed for returning to a previously displayed piece of content. A control button 213 may be displayed for skipping to a next piece of content. These buttons may be displayed in the toolbar 205 of the web browser. Therefore, for example, if the control button 212 is touched by the user, the previously displayed content (i.e., "Content AAA" 202, in this example) of the web page is displayed in place of "Content BBB" 200. Similarly, if "Content AAA" 202 is displayed as the current "news" item, and the control button 213 is triggered by the user, then, as illustrated in FIG. 2E, the displayed content may be advanced to the next piece of content, which would be "Content BBB" 200 of the web page in the present example.

Additionally, as illustrated in FIG. 2E, a control button 214 may be provided for resuming circulation of the content. Activation may thus allow the resumption of dynamical circulation of content between "Content AAA", "Content BBB", "Content CCC", "Content DDD", and "Content EEE."

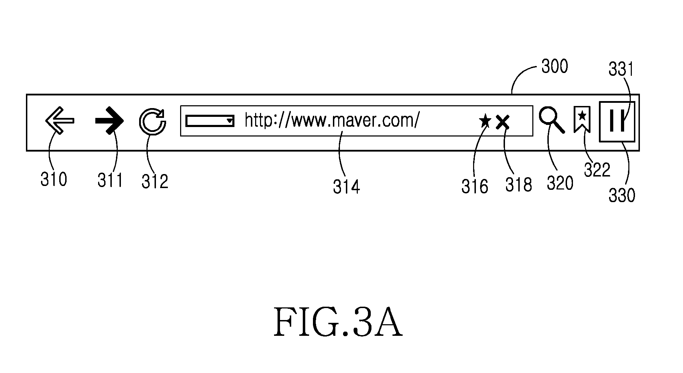

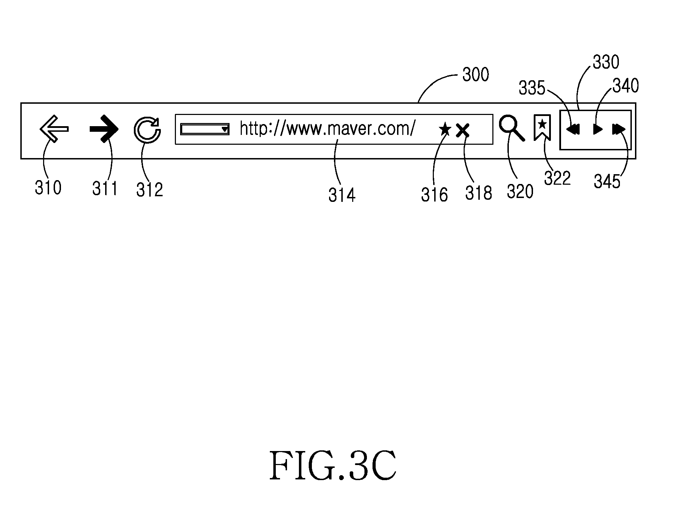

FIGS. 3A and 3C illustrate a toolbar for a web browser according to an example embodiment of the present invention.

FIG. 3A illustrates a toolbar of a web browser when the contents of a web page are dynamically changed and displayed. Initially, the toolbar 300 for the web browser includes a "back" button 310 for returning to a previous web page, an "forward" button 311 for skipping to a next web page, an "refresh" button 312 for performing web page refresh, a search window 314, a "favorites" (i.e., registered Uniform Resource Locator "URL" display) button 316, a "stop" button 318, a search execution button 320, a bookmark (URL registry to favorites) button 322, and a control menu 330 created to configure of at least some content or setting of the web page, according to certain embodiments of the present invention. When it is detected that at least some contents of a currently displayed web page are dynamically changing, the electronic device can generate and display a control menu 330 that facilitates control of the dynamic change of content in the toolbar 300 of the web browser. The control menu 330 may be generated at least with a pause button 331 for pausing the change of the content. This may allow performance of a subsequent operation after pausing the dynamic change of the web page content.

The pause button 331 of the generated control menu 330 pauses the dynamic change of at least some contents of the web page, and a stop button 318 stops display of the whole web page that is being loaded.

FIG. 3C illustrates the configuration of the toolbar 300 after the pause button is activated by the user. The toolbar 300 for the web browser still includes the "back" button 310 for returning to the previous web page, the "forward" button 311 for skipping to the next web page, the "refresh" button 312 for performing the web page refresh, the search window 314, the favorites (i.e., registered URL display) button 316, the stop button 318, the search execution button 320, the bookmark (URL registry to favorites) button 322, and the control menu 330 created to control the change of at least some contents of the web page according to certain embodiments of the present invention. This control menu 330 has changed, and now includes a content "back" button 335 for returning to a previously displayed piece of content of the web page, a resume button 340 for again playing a dynamic change of the contents of the web page, and a content forward button 345 for skipping to subsequent content of the web page.

When the resume button 340 is triggered, circulation of the dynamically changing content may resume, and the pause button 331 may be re-displayed, allowing pausing of the change circulation of web page content, displacing the content back button 335, the resume button 340, and the content forward button 345.

In an example embodiment of the present invention, when it is detected that at least some content of a currently displayed web page has dynamically changing content, the pause button 331 is preferentially created in the toolbar 300, the toolbar 300. When the pause button 331 is triggered, the dynamically changing content is paused, and a content back button 335, resume button 340, and content forward button 345 may be generated and displayed.

The above disclosure does not limit the ambit of the present disclosure, as the various interface buttons may also be created and displayed concurrently as the control menu in the toolbar 300, when the electronic device confirms that at least some web page content is dynamically changed.

Additionally, the pause button 331, the content back button 335, the resume button 340, and the content forward button 345 have been illustrated and described as part of the control menu 330 in the above example embodiment. However, any configuration of input may be utilized for returning to previously displayed, skipping forward to another bit of content, etc.

Also, in the examples given thus far, the control menu 330 is described as being displayed within a particular region of the toolbar 300. But, this is not intended to limit the ambit of the present disclosure, and it is obvious that the control menu 330 can be generated and displayed anywhere on a screen of the electronic device.

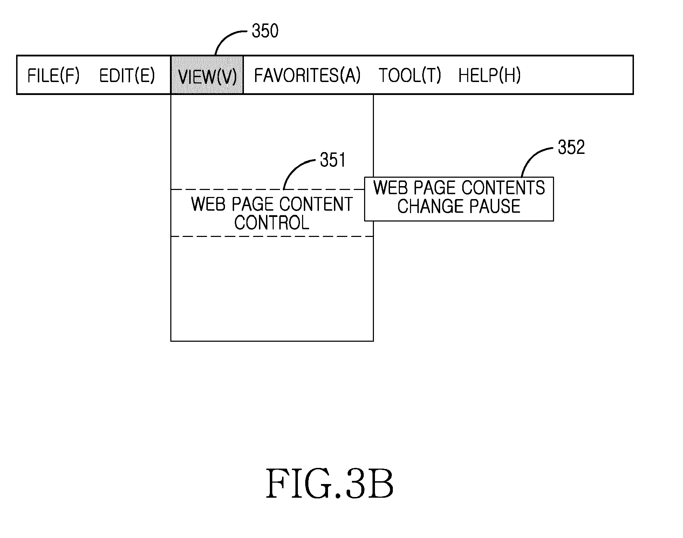

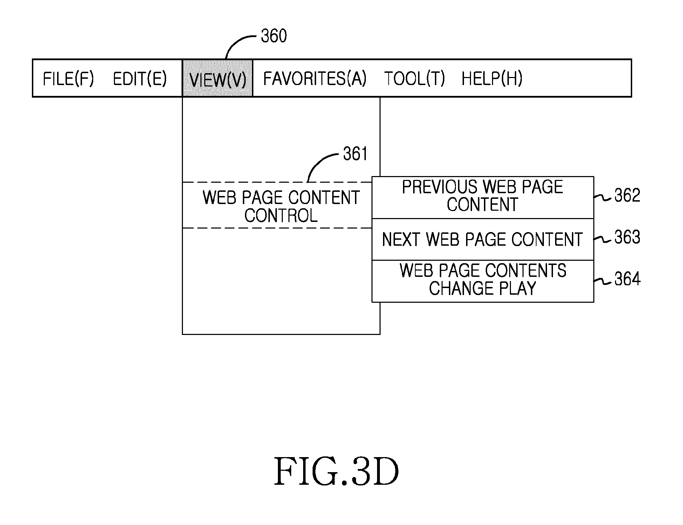

FIGS. 3B and 3D illustrate a selection menu for a web browser according to an example embodiment of the present invention.

FIG. 3B illustrates a selection menu corresponding to the toolbar 300 of FIG. 3A. The selection menu can execute the same pause function as the pause button 331, pausing the dynamic change of web page content. If a "View" menu 350 is selected, a "web page content control" menu item 351 appears. If the "web page contents control" menu item 351 is selected, a "web page contents change pause" item 352 appears, selection of which pauses the dynamic change of web page content.

Similarly, FIG. 3D illustrates a selection menu corresponding to the toolbar 300 of FIG. 3C. In other words, the selection menu is configured to execute the same functions as the content back button 335, the resume button 340, and the content forward button. Accordingly, if a "View" menu 360 is selected, a "web page contents control" menu item 361 appears. If the "web page contents control" menu item 361 is selected, a "previous web page content return" item 362, a "next web page content skip" item 363, and a "web page contents change play" item 364 can appear concurrently. Selection of these items may trigger the corresponding function.

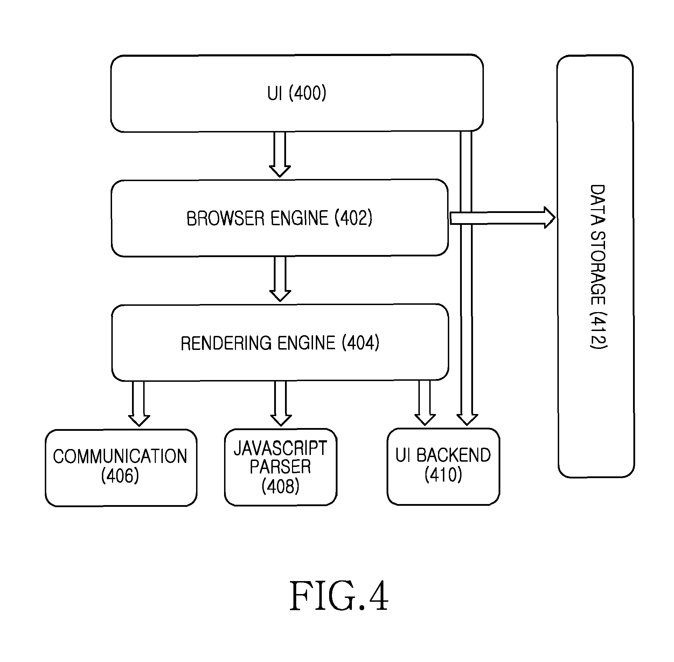

FIG. 4 illustrates elements of a web browser according to an example embodiment of the present invention. The web browser may be, for example, Internet Explorer, Firefox, Safari, Chrome, Opera and the like. The main function of the web browser is to request resources selected by a user from a server, and display the retrieved resources in the web browser. The resources may be presented in various formats and protocols such as HyperText Markup Language (HTML) or eXtensible Markup Language (XML), Portable Document Format (PDF), an image or others according to need or desire. An address of the resource is defined by a Uniform Resource Identifier (URI). The web browser parses and displays source codes (i.e., HTML or XML codes) and Cascading Style Sheets (CSS). Also, the browser includes an address bar capable of inputting a URI, a return button and a skip button, a bookmark, a refresh button, a stop button capable of stopping loading a current document, a home button and, further to exemplary embodiments of the present invention, buttons for controlling dynamically changing content of the web page.

Referring to FIG. 4, the browser includes main elements such as a User Interface (UI) 400, a browser engine 402, a rendering engine 404, communication 406, a Javascript parser 408, a UI backend 410, and a data storage 412.

The user interface 400 may include graphical buttons whose activation controls the inputs to the browser, such as the address bar, the return/skip buttons, the bookmark menu and the like, and other portion of the browser or web page, excepting the window of the browser displaying a requested web page.

The browser engine 402 controls operations between the user interface 400 and the rendering engine 404.

The rendering engine 404 renders and displays requested content. For example, if HTML is requested, the rendering engine 404 parses the HTML and CSS and displays the parsing result (i.e., the generated visual elements of the web page) on a screen.

The communication 406 is used for network communication, such as a HyperText Transfer Protocol (HTTP) request. Also, the communication 406 is an interface independent of a platform, and is executed under each platform.

The UI backend 410 generates for example, a "combo box" and basic windows, based on the rendering engine 404 and the user interface 400.

The Javascript parser 408 parses and executes Javascript code.

The data storage 412, which is a layer for storing data, stores all kinds of resources in a hard disk, such as "cookie" information.

FIG. 5 illustrates an operation process of the rendering engine 404 according to an example embodiment of the present invention.

Referring to FIG. 5, the rendering engine 404 plays a role of displaying requested content on a browser screen.

The rendering engine 404 can display HTML and XML documents and images on the screen. Also, the rendering engine 404 can display even other formats, such as a PDF format, using plug-ins or browser extensions.

The operation process of the rendering engine 404 is described below. The rendering engine 404 parses a HTML document and converts tags within the HTML document into a DOM tree (element 500). The DOM tree, created through the parsing, is converting the content of a HTML/XML document into a data structure of a DOM tree format. Next, the rendering engine 404 parses a style element included together with an external CSS file. In this example, to display the data structure of the DOM tree format on the screen, a data structure of another format is needed.

For this, a render tree is created according to style information and HTML display rule (element 510). The render tree includes squares having visual attributes such as color and areas. The squares are displayed on the screen in defined order.

When the creation of the render tree is finished, layout generation is initiated (element 520). This means that each node of the render tree is displayed in an accurate location of the screen. In other words, each render object does not have a location or size to be displayed on the screen. Through the layout generation, the render object receives a location or size. Next, the UI backend 410 performs a "painting" or "drawing" process, searching the render tree while generating respective visual shapes and the like (element 530). That is, the painting process is a process of filling a specific memory space with Red, Green, Blue "RGB" values, and records detailed information, such as size, location, and color in which to paint.

FIG. 6A illustrates an operation process of a web browser according to an example embodiment of the present invention.

Referring to FIG. 6A, the web browser receives HTML/XML codes through the communication 600 (or 406), parses the HTML/XML codes 601, and constructs a DOM tree 602based on the parsed content. That is, a parser 601 is part of a compiler, and receives markup tags, etc. from HTML/XML documents, etc. and divides the markup tags into several parts in a unit of parsing a sentence.

That is, the parser 601 analyzes the HTML or XML document and creates the DOM tree. The DOM tree is composed of nodes. The node can be an element, a text, an attribute, or other node type. A path of the DOM tree constructs a DOM Application Program Interface (API). That is, the DOM API is an interface for presenting all kinds of information shown in the HTML/XML document such as the element and the text, and includes even methods and attributes utilized for handling these objects.

DOM 603 is an object tree structure called the DOM API for the HTML and XML documents, and defines physical structures of the documents and a method of accessing and handling the documents. Also, the DOM 603 regards the HTML or XML document as one tree structure. The DOM 603 recognizes as a sub tree the HTML or XML document whose element is included in another element, and recognizes as a brother tree the HTML or XML document of an equal level.

The DOM 603 provides a program interface usable in various environments and applications, and is an interface independent from a platform or language of making it possible to search or change the content and structure and style information of a web document such as HTML or XML through a program or script.

Meantime, style sheets 604 are sheets arranging visual style elements of the XML/HTML document 600, such as a format, a shape, a color, a design and the like. The style sheets 604 are stored in a CSS file format.

Because HTML should be used for presenting a structure and meaning of a document, all design elements of a corresponding HTML page are independently separated and are previously stored in special files called style sheets 604.

The style sheets 604 may be basic style sheets provided by the web browser, and can be provided even by a web page manufacturer or user. The web browser supports the definition of styles as desired by the user.

A CSS parser 605 parses a CSS file into style sheet objects. Each style sheet object includes a CSS use rule 606.

Attachment 607 is a process of determining a style and creating a renderer. An 'attach' method exists at all nodes of the DOM tree 602. If a new node is added to the DOM tree 602, the attachment 607 calls an "attach" method of the new node.

While the DOM tree 602 is built, the web browser builds a render tree 608. An object of the render tree 608 is to enable content to be painted in correct order by a sequence of displaying objects on a screen and a visual element of a document.

To build the render tree 608, a visual attribute of each object of the render tree 608 is determined. This determination is performed by determining a style attribute of each element of the render tree 608. The element is also called a term of 'frame', 'renderer' or 'render object'. According to the style rule 606, each renderer may display a square matched to a CSS box of a node. Each renderer may include geometrical information such as a width, a height, and a location.

When a renderer is created and added to the render tree 608, the renderer has no size and location information. Determining these values is entitled layout 609 or "reflow."

Painting 610 searches the render tree 608 for displaying (element 611) contents on the screen and calls a 'paint' method of the renderer. The painting 610 uses an element based on a UI.

FIG. 6B illustrates a relationship between a data structure of a document and a memory and an application program according to an example embodiment of the present invention.

Referring to FIG. 6B, if a HTML or XML document is parsed (601, 605) and the parsing result is created as a DOM object tree structure 650 in a memory 630, an application program 640 processes (e.g., modifies or deletes) objects from the DOM object tree structure 650 created in the memory 630.

Accordingly, when the contents of a web page are changed, by recording content processing the object, the application program 640 can display the previous content of the web page or the next content of the web page.

According to cases, the change of the contents of the web page can be carried out by processing objects from a render object tree structure. At this time, content processing the object from the render object tree structure is recorded.

As described above, the application program 640 does not modify source codes but processes the objects from the DOM object or render object tree structure, thereby creating and outputting the desired result (e.g., FIGS. 2A to 2E).

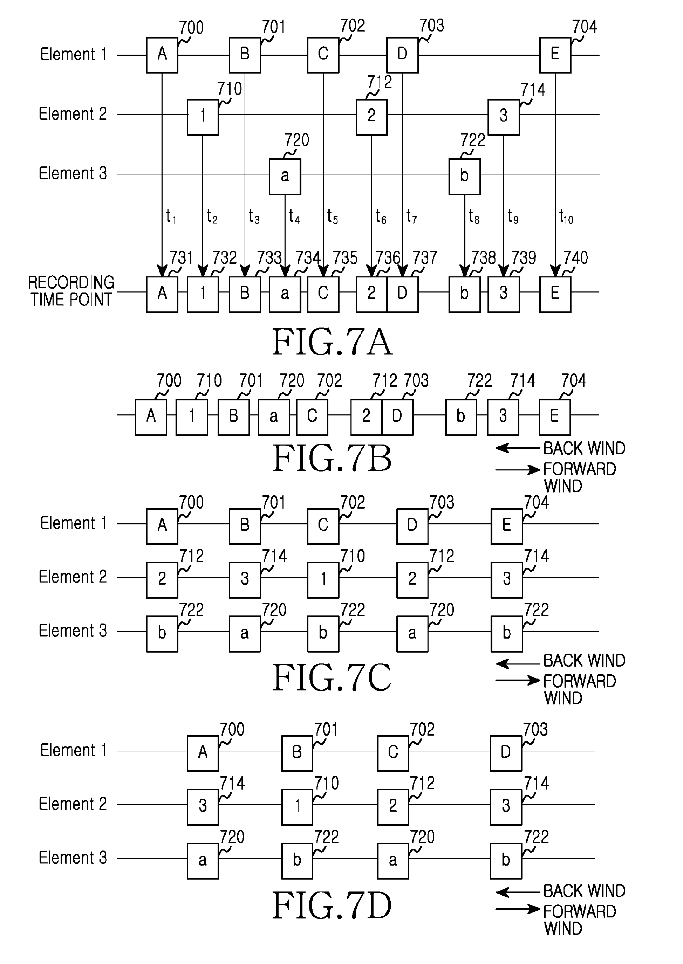

FIGS. 7A to 7D illustrates timing for recording of dynamically changing content of a web page and displaying the dynamically changing content according to an example embodiment of the present invention.

Referring to FIG. 7A, the contents of a 1st element, a 2nd element, and a 3rd element of a web page are dynamically changed periodically or aperiodically, respectively. The 1st element, the 2nd element, and the 3rd element have image or text attributes. According to cases, the element may be a flash video played within the web page.

For example, the contents of the 1st element of the web page are changed like "Content A" 700, "Content B" 701, "Content C" 702, "Content D" 703, and "Content E" 704 at 't1', 't3', 't5', 't7', and 't10', respectively. The contents of the 2nd element of the web page are changed like "Content 1" 710, "Content 2" 712, and "Content 3" 714 at 't2' 't6', and 't9', respectively. The contents of the 3rd element of the web page are changed like "Content a" 720 and "Content b" 722 at 't4' and 't8', respectively.

Meantime, whenever the element of the web page is changed, the action (i.e., insertion / deletion / location modification / contents change / style change or the like) of DOM objects or render objects for painting the element on a screen are recorded. That is, when "Content A" is changed into "Content B" within the web page, because the action (i.e., insertion / deletion / location modification / contents change / style change or the like) of objects of a DOM tree or render tree loaded from a memory are performed, content processing of the objects of the DOM tree structure or render tree structure is recorded.

Accordingly, when "Content A", "Content 1", "Content B", "Content a", "Content C", "Content 2", "Content D", "Content b", "Content 3", and "Content E" are changed at 't1', 't2' 't3', 't4', 't5', 't6', 't7', 't8', 't9', and 't10' within the web page respectively, the contents 731, 732, 733, 734, 735, 736, 737, 738, 739, and 740 processing the objects of the DOM tree structure or render tree structure related to these are recorded, respectively.

Referring to FIG. 7B, after the contents processing the objects of the DOM tree structure or render tree structure dependent on the change of the contents of the web page are all recorded as in FIG. 7A, a user can pause the dynamic change of the contents of the web page, or return to the previous content of the web page, or skip to the next content of the web page, using the control button of FIG. 3A or FIG. 3C provided in the toolbar 300 of the web browser or the selection menu of FIG. 3B or FIG. 3D.

For instance, after the content of the web page is changed (like "Content E" 704), the change of the contents of the web page is paused, and the content back button 335 (for returning to the previous content of the web page), and the content forward button 340 (for skipping to the next content of the web page) are created in the toolbar 300 of the web browser, as shown in FIG. 3C. When the content back button 335 is activated by the user, the web page including "Content 3" 714 is displayed on the screen, with reference to the recorded information 739 (of the DOM object or render object for painting "Content 3" 714). In other words, the processing of the objects of the DOM tree structure or render tree structure for displaying the web page including "Content 3" 714 is executed.

In some cases, recording of the change of multiple elements within the web page is carried out independently, and thus, the content of the multiple elements are displayed independently from the content back button 335, as shown in FIG. 7C.

For instance, referring to FIG. 7C, after the contents of the web page are advanced to "Content E" 704, "Content 3" 714, and "Content b" 722, the circulation of the content may be paused. If the content back button 335 is triggered by the user, the web page including "Content D" 703, "Content 2" 712, and "Content a" 720 may be displayed, based on the recorded content 737, 736, and 734 processing the objects of the DOM tree structure or render tree structure. If the content back button 335 is again triggered by the user, the content of "Content C" 702, "Content 1" 710, and "Content b" 722 may be displayed, because of the asynchronous display of the respective elements (as seen in FIG. 7A). That is, the 1st element of the web page is displayed while "Content A" 700, "Content B" 701, "Content C" 702, "Content D" 703, and "Content E" 704 are circulated. The 2nd element of the web page is displayed while "Content 1" 710, "Content 2" 712, and "Content 3" 714 are circulated. The 3rd element of the web page is displayed while "Content a" 720 and "Content b" 722 are circulated.

FIG. 7D illustrates an example of when the content back button 335 is triggered after the action (i.e., insertion / deletion / location modification / contents change / style change or the like) of DOM objects or render objects such as "Content A", "Content 1", "Content B", "Content a", and "Content C" of the web page are recorded at 't1', 't2' 't3', 't4', and 't5' and the change of the contents of the web page is paused.

For instance, when the pause button 331 is triggered by the user, the web page including "Content D", "Content 3", and "Content b" is displayed. Subsequently, when the content back button 335 is once again triggered by the user, the web page including "Content C", "Content 2", and "Content a" is displayed. Subsequently, when the content back button 335 is once again triggered by the user, the web page including "Content B", "Content 1", and "Content b" is displayed. Also, when the content back button 335 is once again touched by the user, the web page including "Content A", "Content 3", and "Content a" is displayed.

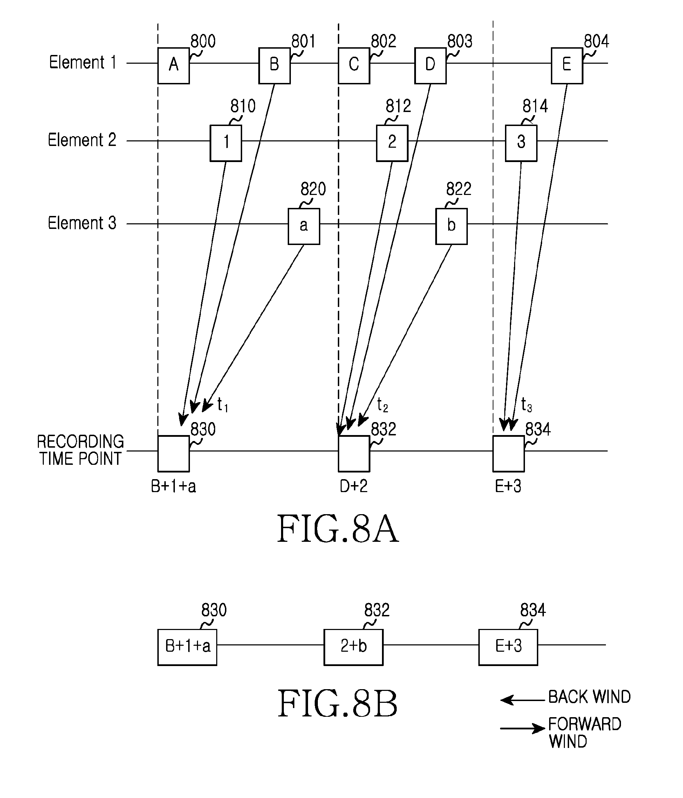

FIGS. 8A and 8B are diagrams illustrating a timing for recording of the dynamically changing web page content, and displaying the dynamically changing web page content according to an example embodiment of the present invention.

Referring to FIG. 8A, the contents of a 1st element, a 2nd element, and a 3rd element of a web page are illustrated as dynamically changing periodically or aperiodically, respectively. The 1st element, the 2nd element, and the 3rd element have image or text attributes. In some cases, the respective element may be a flash video played within the web page.

For example, the content of the 1st element of the web page is circulated from "Content A" 800, "Content B" 801, "Content C" 802, "Content D" 803, to "Content E" 804. The contents of the 2nd element of the web page is circulated from "Content 1" 810, "Content 2" 812, to "Content 3" 814. The contents of the 3rd element of the web page is circulated from "Content a" 820 to "Content b" 822.

Meantime, information 830, 832, and 834 about DOM objects or render objects for painting changed elements of a currently displayed web page on a screen are recorded at periodical time points, i.e., 't1', 't2', and 't3' irrespective of an element change time point of the web page. That is, the information 830 about the DOM object or render object for displaying "Content B" 801, "Content 1" 810, and "Content a" 820 within the web page is recorded at the 't1' time point. The information 832 about the DOM object or render object for displaying "Content D" 803, "Content 2" 812, and "Content b" 822 within the web page is recorded at the 't2' time point. The information 834 about the DOM object or render object for displaying "Content E" 804 and "Content 3" 814 within the web page is recorded at the 't3' time point.

After the information about the DOM objects or render objects (for painting the changed elements of the currently displayed web page on the screen) are periodically recorded, a user can pause the dynamic change of the contents of the web page, or return to previous content of the web page, or skip to the next content of the web page, using the control buttons of FIG. 2A to FIG. 2D provided in the toolbar 300 of the web browser.

For example, when the change of the contents of the web page is paused after the 't3' time point as in FIG. 8B, the content back button 335 and the content forward button 345 are created in the toolbar 300 of a web browser as in FIG. 3C. Accordingly, when the content back button 335 is triggered, a web page including "Content D+2+b" is displayed on a screen with reference to the recorded information 832 (about the DOM object or render object for painting "Content D+2+b"). If the content forward button 335 is once again triggered by the user, the web page including "Content B+1+a" is displayed on the screen with reference to the recorded information 830 (about the DOM object or render object for painting "Content B+1+a").

Because the recording time point may be different from a web page change time point, as seen in FIG. 8A, the contents (e.g., "Content A" 800 and "Content C" 802) of the web page changed between the recording time point and a next recording time point may, in this embodiment, be missed.

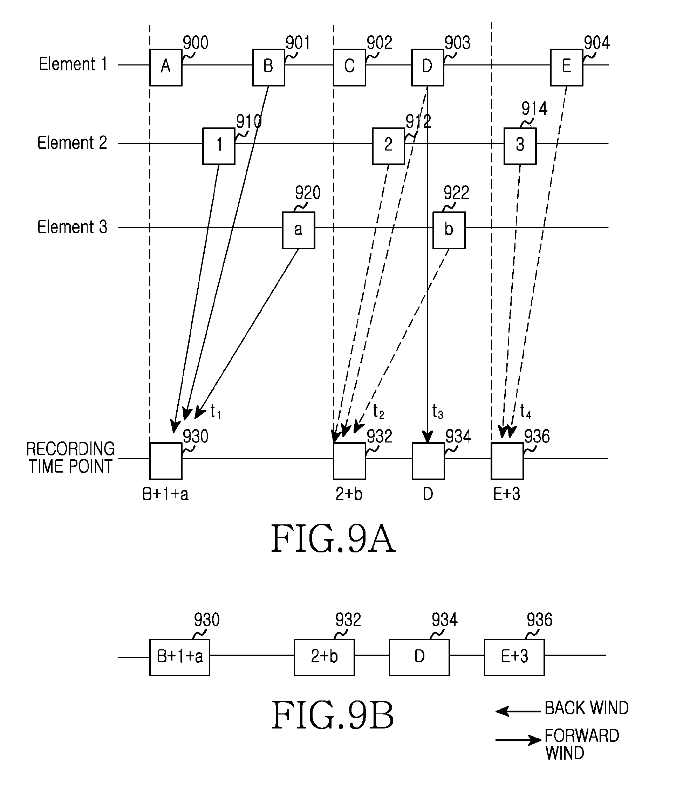

FIGS. 9A and 9B are diagrams illustrating timing for recording of the dynamically changing web page content, and displaying the dynamically changing web page content, according to an example embodiment of the present invention.

Referring to FIG. 9A, the contents of a 1st element, a 2nd element, and a 3rd element of a web page are dynamically changed periodically or aperiodically, respectively. The 1st element, the 2nd element, and the 3rd element have image or text attributes. In some cases, the element may be a flash video played within the web page.

The contents of the 1st element of the web page are circulated from "Content A" 900, "Content B" 901, "Content C" 902, "Content D" 903, to "Content E" 904. The contents of the 2nd element of the web page are circulated from "Content 1" 910, "Content 2" 912, to "Content 3" 914. The contents of the 3rd element of the web page are circulated from "Content a" 920 to "Content b" 922.

Meantime, information 930, 932, and 934 about DOM objects or render objects for painting changed elements of a currently displayed web page are recorded at periodical time points, i.e., 't1', 't2', and 't3,' irrespective of an element change time point of the web page. That is, the information 930 about the DOM object or render object for displaying "Content B" 901, "Content 1" 910, and "Content a" 920 within the web page is recorded at the 't1' time point. The information 932 about the DOM object or render object for displaying "Content D" 903, "Content 2" 912, and "Content b" 922 within the web page is recorded at the 't2' time point. The information 934 about the DOM object or render object for displaying "Content D" 903 within the web page is recorded when significant content is changed (i.e., when "Content C" 902 is changed into "Content D" 903) at the 't3' time point. That is, when "Content C" 902 is wholly changed into "Content D" 903, the information about the DOM object or render object related to this is recorded. And, information 936 about a DOM object or render object for displaying "Content E" 904 and "Content 3" 914 within the web page is recorded at a 't4' time point.

After the information 930, 932, and 936 is recorded (i.e., information about the DOM objects or render objects for painting the changed elements of the currently displayed web page, and the information 934 about the DOM object or render object related to the changed significant content), a user can pause the dynamic change of the web page content, or return to the previous content of the web page, or skip to the next content of the web page, using the control button of FIG. 3A or FIG. 3C provided in the toolbar 300 of the web browser.

For example, when the change of the contents of the web page is paused after the 't4' time point, as in FIG. 9B, the content back button 335 and the content forward button 345 are created in the toolbar 300 of a web browser, as seen in FIG. 3C. If so, when the content back button 335 is selected by the user, the web page including "Content D" is displayed on a screen with reference to the recorded information 934 (about the DOM object or render object for painting "Content D"). If the content back button 335 is again selected by the user, the web page including "Content D+2+b" is displayed on the screen (with reference to the recorded information 932 about the DOM object or render object for painting "Content D+2+b"). If the content back button 335 is again triggered by the user, the web page including "Content B+1+a" is displayed on the screen (with reference to the recorded information 930 about the DOM object or render object for painting "Content B+1+a").

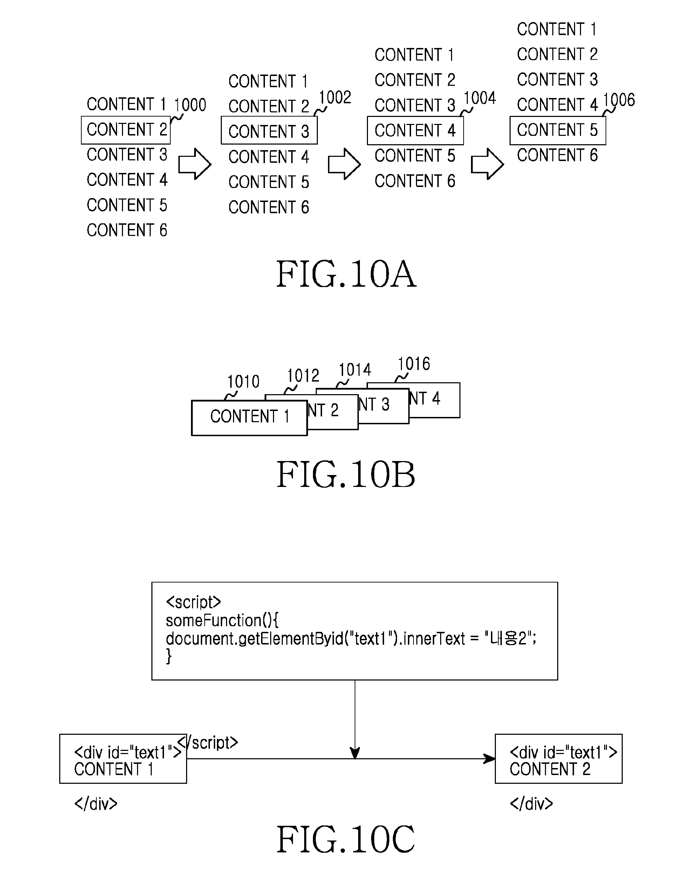

FIGS. 10A to 10C illustrate a technique of dynamically changing specific web page content according to an example embodiment of the present invention.

FIG. 10A illustrates an example in which the locations of render objects related to "Content 1" to "Content 6" are changed in a render tree structure. Changing the locations of the render objects in the render tree structure represents selecting content to be outputted on a screen.

For example, at a 1st time point, when content to be displayed on a screen is located in a render object related to "Content 2" 1000, "Content 2" 1000 is displayed in a specific region of the screen through re-layouting and re-painting. At a 2nd time point, when the content to be displayed on the screen is located in a render object related to "Content 3" 1002, "Content 3" 1002 is displayed in a specific region of the screen through the re-layouting and re-painting. At a 3rd time point, when the content to be displayed on the screen is located in a render object related to "Content 4" 1004, "Content 4" 1004 is displayed in a specific region of the screen through the re-layouting and re-painting. At a 4th time point, when the content to be displayed on the screen is located in a render object related to "Content 5" 1006, "Content 5" 1006 is displayed in a specific region of the screen through the re-layouting and re-painting. That is, the locations of "Content 2" 1000 to "Content 5" 1006 are changed and different from one another within the render tree structure, but the locations of "Content 2" 1000 to "Content 5" 1006 are the same as one another on the screen.

Referring to FIG. 10B, the locations of objects related to "Content 1" 1010 to "Content 4" 1016 are the same as one another in a DOM tree structure or render tree structure. In other words, the objects related to "Content 1" 1010 to "Content 4" 1016 are overlapped with one another in the DOM tree structure or the render tree structure and, by changing display attributes of the objects related to "Content 1" 1010 to "Content 4" 1016, "Content 1" 1010 to "Content 4" 1016 can be alternately displayed in the same location.

For instance, if the display attribute of the object related to "Content 1" 1010 is set as "block" and the display attributes of the objects related to the remnant "Content 2" 1012, "Content 3" 1014, and "Content 4" 1016 are set as "none" respectively, "Content 1" 1010 appears and is displayed on the screen.

Similarly, if the display attribute of the object related to "Content 2" 1012 is set as "block" and the display attributes of the objects related with the remnant "Content 1" 1010, "Content 3" 1014, and "Content 4" 1016 are set as "none" respectively, "Content 2" 1012 appears when being displayed on the screen. If the display attribute of the object related to "Content 3" 1014 is set as "block" and the display attributes of the objects related with the remnant "Content 1" 1010, "Content 2" 1012, and "Content 4" 1016 are set as "none" respectively, "Content 3" 1014 appears when being displayed on the screen. If the display attribute of the object related to "Content 4" 1014 is set as "block" and the display attributes of the objects related with the remnant "Content 1" 1010, "Content 2" 1012, and "Content 3" 1014 are set as "none" respectively, "Content 4" 1016 appears when being displayed on the screen.

Referring to FIG. 10C, the "Content 1" is changed to "Content 2".

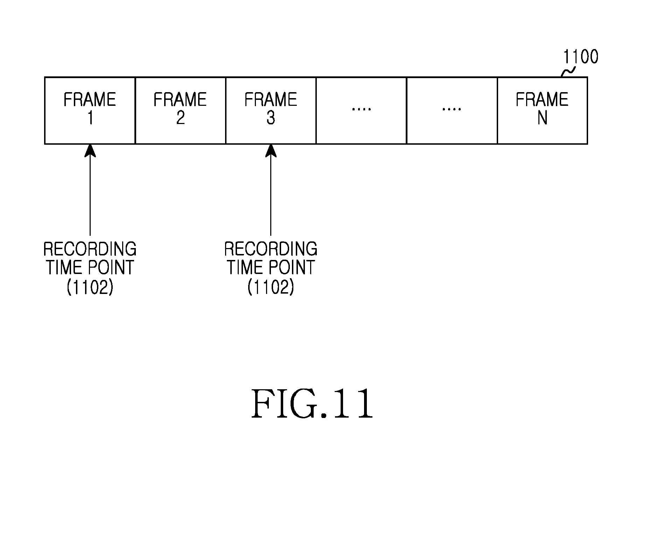

FIG. 11 illustrates recording information about a flash video played within a web page according to an example embodiment of the present invention.

Referring to FIG. 11, in a case of a flash video, an electronic device records an image or frame number of the flash video at a recording time point 1102. For example, the electronic device records information about a frame 1 corresponding to a played image at a 1st time point, and records information about a frame 3 corresponding to a played image at a 2nd time point.

After that, when a change of the contents of a web page is paused, the played flash video is paused, and an image corresponding to a recorded frame number may be displayed according to the previous web page content return button 335 and the next web page content skip button 345.

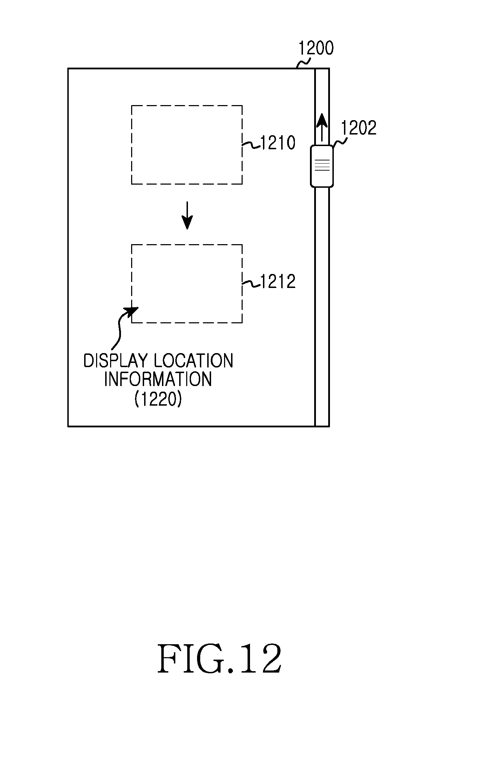

FIG. 12 illustrates recording information about a location change of content on a screen caused by scrolling within a web page according to an example embodiment of the present invention.

Referring to FIG. 12, the content 1210 of a web page is displayed on a screen 1200. After that, when a scroll bar 1202 is scrolled up, the content 1210 of the web page is moved down and located in a region 1212 on the screen 1200. In other words, a location of the content 1210 is not changed during a layout process, but the relative location 1212 of the content 1210 is changed on the screen 1200 through scrolling. Therefore, display location information 1220 of the content 1210 whose location is changed on the screen 1200 through scrolling is recorded.

Though the present example discusses a single piece of content in scrolling, the locations of all web page content is changed during scrolling. Accordingly, relative location information about all web page content displayed on the screen may be recorded.

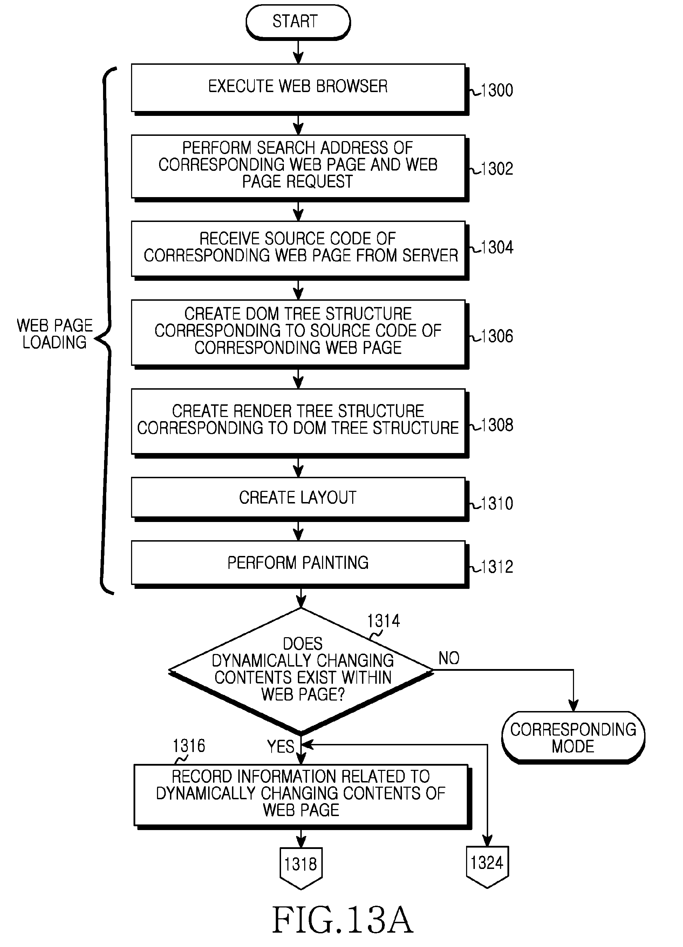

FIGS. 13A - 13B is a flowchart illustrating an example sequence of steps for controlling a dynamically changing object of a web page according to an example embodiment of the present invention.

Referring to FIG. 13A, in step 1300, the electronic device executes a web browser. In step 1302, the electronic device performs an address search of a corresponding web page and a web page request.

Next, in step 1304, the electronic device receives a source code (e.g., HTML or XML code) of the corresponding web page from a server.

After that, in step 1306, the electronic device parses the source code of the corresponding web page and creates a DOM tree structure. At this time, the DOM tree structure exists as a data structure within a memory.

Next, in step 1308, the electronic device combines the DOM tree structure with a style rule of the web page and creates a render tree structure.

After that, in step 1310, the electronic device performs a layout generation, determining a location and size of each render object, based on the render tree structure. In step 1312, the electronic device performs painting based on the layout result. At this time, the content of the web page is displayed on a screen. Additionally, the instruction button 330 for pausing a dynamic change of the contents of the web page is generated and displayed, and the selection menus 351 and 352 are activated in the web browser. Pausing may constitute a hold on re-performing the layout generation and painting in the dynamic change of the web page content.

Next, when there are dynamically changing contents within the web page displayed on the screen in step 1314, the electronic device proceeds to step 1316 and records information about the dynamically changing contents within the web page. For example, the electronic device records the insertion / deletion / location modification / contents change / style change or the like of objects of the DOM tree structure related to the dynamically changing contents within the web page (referring to FIGS. 10A and 10B). Or, the electronic device records the insertion / deletion / location modification / contents change / style change or the like of objects of the render tree structure related to the dynamically changing contents within the web page. According to one implementation, when content is dynamically changed through Javascript, the electronic device records the Javascript content to be executed at a change time point (referring to FIG. 10C).

According to another implementation, when a flash video is played within the web page, the electronic device periodically records a frame number of the currently displayed flash video (referring to FIG. 11). Or, when a location of content of the web page is changed through scrolling, the electronic device records the changed location of the content on the screen (referring to FIG. 12).

If there are no dynamically changing contents within the currently displayed web page in step 1314, the electronic device enters a corresponding mode and maintains a state of the currently displayed web page.

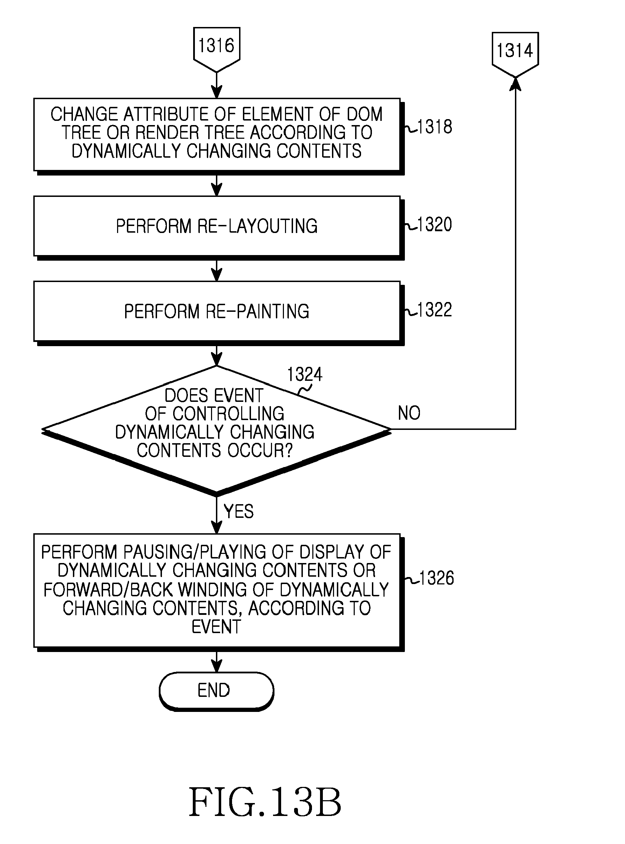

Next, referring to FIG. 13B, in step 1318, the electronic device changes an attribute of an element of a DOM tree or render tree according to the dynamically changing contents of the web page. That is, the electronic device applies the insertion / deletion / location modification / contents change / style change or the like of objects in a tree structure.

After that, in step 1320, the electronic device performs re-layout determining the location and size of an object of the web page to be displayed on the screen, based on the changed DOM tree structure or render tree structure. In step 1322, the electronic device displays the web page including the changed content on the screen according to the re-layout result. That is, when the content of the web page is changed, the change of the content of the web page is achieved through the insertion / deletion / location modification / attribute change or the like of the objects of the DOM tree or render tree of the web page loaded from the memory.

Next, if an event of controlling dynamically changing content occurs in step 1324 (i.e., selection of a content back button 335 of FIG. 3C), the electronic device proceeds to step 1326 and, according to the event, pauses/plays a display of the dynamically changing contents of the web page, or performs returning to the previous content of the web page or skipping to the next content of the web page (referring to FIG. 2).

After that, the electronic device terminates the procedure of the exemplary embodiment of the present invention.

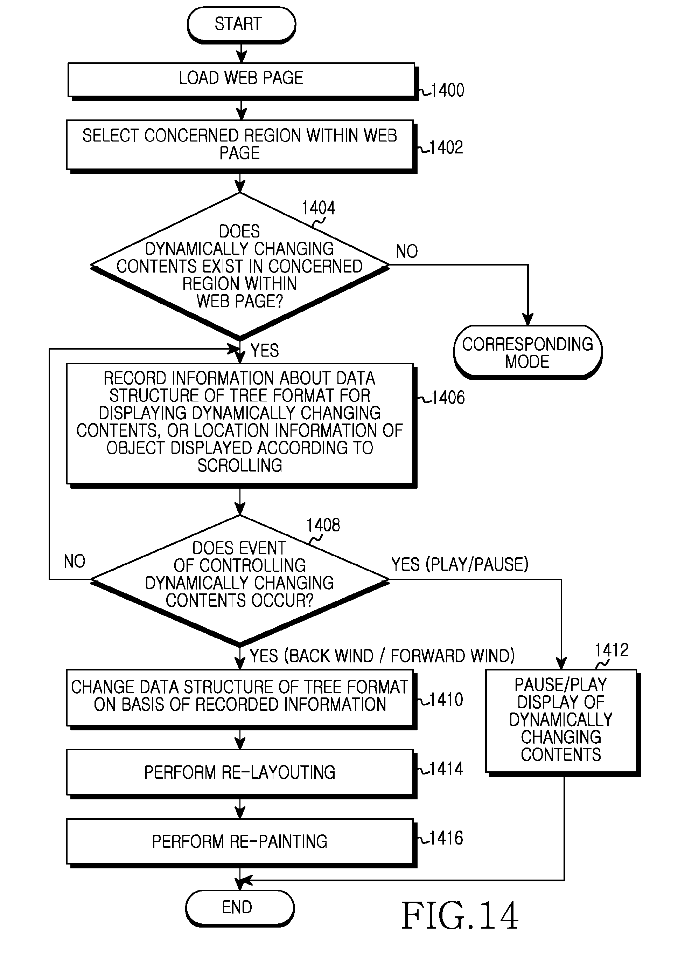

FIG. 14 is a flowchart illustrating a procedure for controlling a dynamically changing object of a web page according to an example embodiment of the present invention.

Referring to FIG. 14, in step 1400, the electronic device executes a web browser and loads a web page (step 1300 to step 1312 of FIG. 13). At this time, the instruction button 330 for pausing a dynamic change of the contents of the web page and the selection menus 351 and 352 are activated in the web browser. Here, the pausing is halts re-performing layout generation and painting, thereby pausing dynamic change of the web page content.

Next, in step 1402, the electronic device selects a concerned region within the loaded web page. The concerned region is defined to select part of the dynamically changing contents of the plurality of objects and track the changing contents, when the contents of a plurality of objects within the web page are changed.

Subsequently, when there are dynamically changing contents in the concerned region of the web page in step 1404, the electronic device proceeds to step 1406 and records information about the dynamically changing contents within the web page. At this time, the change of content outside the bounds of the concerned region is not recorded. For example, the electronic device records the insertion / deletion / location modification / contents change / style change or the like of objects of a DOM tree structure related to the dynamically changing contents in the concerned region within the web page (referring to FIGS. 10A and 10B). Or, the electronic device records the insertion / deletion / location modification / contents change / style change or the like of objects of a render tree structure related to the dynamically changing contents in the concerned region within the web page. According to implementation, when content is dynamically changed through Javascript, the electronic device records the Javascript content to be executed at a change time point (referring to FIG. 10C).

According to another implementation, when a flash video is played within the web page, the electronic device periodically records a frame number of the currently displayed flash video (referring to FIG. 11). Or, when a location of content of the web page is changed through scrolling, the electronic device records the changed location of the content on the screen (referring to FIG. 12).

If there are no dynamically changing contents within the currently displayed web page in step 1404, the electronic device enters a corresponding mode and maintains a state of the currently displayed web page.

Although not illustrated, the electronic device changes an attribute of an element of the DOM tree or render tree according to the dynamically changing contents of the web page. That is, the electronic device applies the insertion / deletion / location modification / contents change / style change or the like of objects in a tree structure, and performs re-layout determining the location and size of an object of the web page to be displayed on the screen, based on the changed DOM tree structure or render tree structure, and displays the web page including the changed content on the screen according to the re-layout result. That is, when the content of the web page is changed, the change of the content of the web page is achieved through the insertion / deletion / location modification / attribute change or the like of the objects of the DOM tree or render tree of the web page loaded from the memory.

Subsequently, when an event for controlling dynamically changing contents does not occur in step 1408, the electronic device returns to step 1406.

When the event of controlling the dynamically changing contents occurs in step 1408, (i.e., when an instruction of pausing 330 / playing 340 a display of the dynamically changing contents is executed), the electronic device proceeds to step 1412 and displays or pauses the dynamically changing contents. In other words, the electronic device pauses or performs a re-layouting and re-painting work under the changed DOM tree or render tree structure.

When the event of controlling the dynamically changing contents occurs in step 1408, (i.e., when the instructions 335 and 345 of returning to the previous content and skipping to the next content are executed), the electronic device proceeds to step 1410 and changes a DOM tree structure or render tree structure into a DOM tree structure or render tree structure corresponding to the instruction of returning to the previous content or skipping to the next content, based on the recorded information.

After that, in step 1414, the electronic device re-performs layout generation, determining the location and size of an object of the web page to be displayed on the screen, based on the changed DOM tree structure or render tree structure. Next, in step 1416, the electronic device displays the web page including the changed content on the screen according to the new layout result. That is, when the content of the web page is changed, the change of the content of the web page is achieved through the insertion / deletion / location modification / attribute change or the like of the objects of the DOM tree or render tree of the web page loaded from the memory.

After that, the electronic device terminates the procedure of the exemplary embodiment of the present invention.

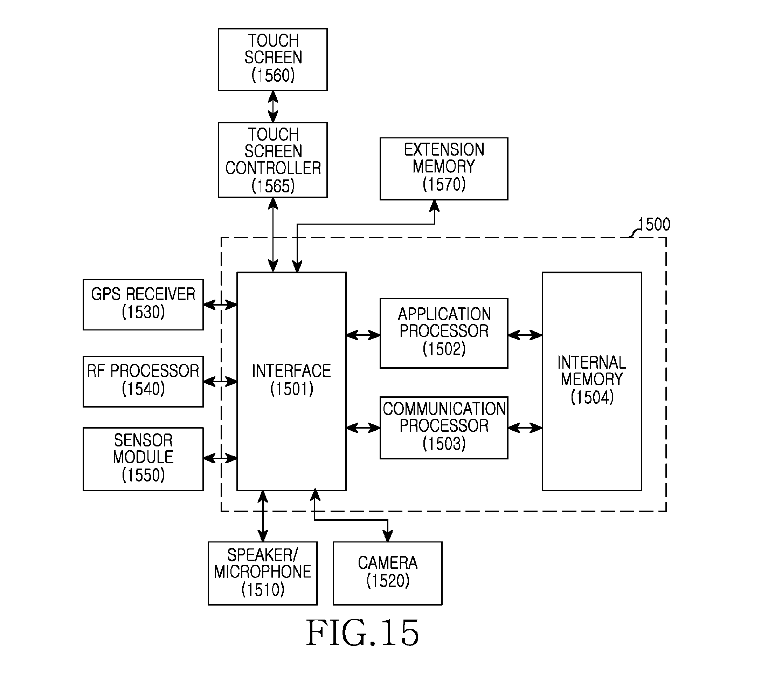

FIG. 15 is a block diagram illustrating an implementation of an electronic device according to an example embodiment of the present invention.

The electronic device can be a portable electronic device, such as a portable terminal, a mobile terminal, a mobile pad, a media player, a tablet computer, a handheld computer, or a Personal Digital Assistant (PDA). Also, the electronic device may be any portable electronic device, including a device combining two or more functions among these devices.

Referring to FIG. 15, the electronic device includes a controller 1500, a speaker/microphone 1510, a camera 1520, a Global Positioning System (GPS) receiver 1530, a Radio Frequency (RF) processor 1540, a sensor module 1550, a touch screen 1560, a touch screen controller 1565, and an extension memory 1570.

The controller 1500 can include an interface 1501, one or more processors 1502 and 1503, and an internal memory 1504. According to cases, the whole controller 1500 is also called a processor. The interface 1501, the application processor 1502, the communication processor 1503, and the internal memory 1504 can be separate constituent elements or can be integrated in one or more integrated circuits.

The application processor 1502 executes various software programs to perform various functions for the electronic device. The communication processor 1503 performs processing and control for voice communication and data communication. Also, further to this general function, the processors 1502 and 1503 play even a role of executing specific software modules (i.e., instruction sets) stored in the extension memory 1570 or internal memory 1504 to perform specific various functions corresponding to the software modules. That is, the processors 1502 and 1503 interwork with software modules stored in the extension memory 1570 or the internal memory 1504 and performs a method for controlling a display of a specific content within a web page of an exemplary embodiment of the present invention.

For example, the application processor 1502 executes a web browser, performs an address search of a corresponding web page and a web page request, receives a source code (e.g., HTML or XML code) of the corresponding web page from a server, parses the source code of the corresponding web page and creates a DOM tree structure, combines the DOM tree structure with a style rule of the web page and creates a render tree structure, performs a layout work of determining a location and size of each render object based on the render tree structure, performs a painting work based on the layouting result, when there are dynamically changing contents within the web page displayed on the screen, records information about the dynamically changing contents within the web page, when there are not the dynamically changing contents within the currently displayed web page, enters a corresponding mode and maintains a state of the currently displayed web page, changes an attribute of an element of a DOM tree or render tree according to the dynamically changing contents of the web page, performs re-layout determining the location and size of an object of the web page to be displayed on the screen based on the changed DOM tree structure or render tree structure, displays the web page including the changed content on the screen according to the re-layout result and, if an event of controlling dynamically changing content occurs, the application processor 1502 pauses/plays a display of the dynamically changing contents of the web page or performs returning to the previous content of the web page or skipping to the next content of the web page (referring to FIG. 2), according to the event.

According to another example embodiment, the application processor 1502 executes a web browser and loads a web page, selects a concerned region within the loaded web page. Here, the concerned region being defined to, when the contents of a plurality of objects within the web page are changed, select part of the dynamically changing contents of the plurality of objects and track the changing contents. When there are dynamically changing contents in the concerned region of the web page, the application processor 1502 records information about the dynamically changing contents within the web page. At this time, the change of content out of the concerned region is not recorded. If there are not the dynamically changing contents within the currently displayed web page, the application processor 1502 enters a corresponding mode and maintains a state of the currently displayed web page. When an event of controlling dynamically changing contents occurs, that is, when an instruction of pausing (330) / playing (340) a display of the dynamically changing contents is executed, the application processor 1502 displays or pauses the dynamically changing contents, when the instructions 335 and 345 of returning to the previous content and skipping to the next content are executed, changes a DOM tree structure or render tree structure into a DOM tree structure or render tree structure corresponding to the instruction of returning to the previous content or skipping to the next content based on the recorded information, performs re-layout determining the location and size of an object of the web page to be displayed on the screen based on the changed DOM tree structure or render tree structure, and displays the web page including the changed content on the screen according to the re-layout result. That is, when the content of the web page is changed, the change of the content of the web page is achieved through the insertion / deletion / location modification / attribute change or the like of the objects of the DOM tree or render tree of the web page loaded from the memory.

Meantime, other processors (not shown) can include one or more data processors, image processors, or COders/DECoders (CODECs). The data processor, the image processor, or the CODEC may be implemented separately. Also, the data processor, the image processor, or the CODEC may be composed of several processors performing different functions. The interface 1501 is connected to the touch screen controller 1565 of the electronic device and the extension memory 1570 thereof.

The sensor module 1550 can be coupled to the interface 1501 to enable various functions. For instance, a motion sensor and an optical sensor can be coupled to the interface 1501 to sense a motion of the electronic device and sense a light from the exterior, respectively. Additionally, a positioning system and other sensors such as a temperature sensor, a biometric sensor and the like can be connected to the interface 1501 to perform related functions.

The camera 1520 can be coupled with the sensor module 1550 through the interface 1501 to perform a camera function such as photo and video recording.

The RF processor 1540 performs a communication function. For example, the communication processor 1503 may cause the RF processor 1540 to convert an RF signal into a baseband signal and provides the baseband signal to the communication processor 1503, or converts a baseband signal from the communication processor 1503 into an RF signal and transmits the RF signal. Here, the communication processor 1503 processes a baseband signal in various communication schemes. For example, the communication scheme can include, though not limited to, a Global System for Mobile Communication (GSM) communication scheme, an Enhanced Data GSM Environment (EDGE) communication scheme, a Code Division Multiple Access (CDMA) communication scheme, a Wireless-Code Division Multiple Access (W-CDMA) communication scheme, a Long Term Evolution (LTE) communication scheme, an Orthogonal Frequency Division Multiple Access (OFDMA) communication scheme, a Wireless Fidelity (Wi-Fi) communication scheme, a WiMAX communication scheme or/and a Bluetooth communication scheme.

The speaker/microphone 1510 can process input and output of an audio stream, such as voice recognition, voice replication, digital recording and a telephone function. That is, the speaker/microphone 1510 converts a voice signal into an electrical signal, or converts an electrical signal into a voice signal. Although not illustrated, detachable ear phone, head phone or head set can be connected to the electronic device through an external port.

The touch screen controller 1565 can be coupled to the touch screen 1560. The touch screen 1560 and the touch screen controller 1565 can detect a touch and a motion or an interruption of them, by using, although not limited to, not merely capacitive, resistive, infrared and surface acoustic wave technologies for determining one or more touch points with the touch screen 1560 but also any multi-touch sensing technology including other proximity sensor arrays or other elements.

The touch screen 1560 provides an input/output interface between the electronic device and a user. That is, the touch screen 1560 forwards a user's touch input to the electronic device. Also, the touch screen 1560 is a medium for showing to the user an output of the electronic device. That is, the touch screen 1560 shows to the user a visual output. This visual output is displayed in form of a text, a graphic, a video and a combination of them.

The touch screen 1560 can be various displays. For instance, the touch screen 1560 can be, although not limited to, a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED) or a Flexible LED (FLED).

The GPS receiver 1530 converts signals received from three artificial satellites into information of a location, a speed, an hour and the like. For instance, the GPS receiver 1530 determines distances between the artificial satellites and the GPS receiver 1530 through a multiplication of the speed of light and a signal arrival time, and obtains accurate locations and distances of the three artificial satellites and measures a location of the electronic device by the known triangulation principle.

The extension memory 1570 or the internal memory 1504 can include high-speed random access memory and/or non-volatile memory such as one or more magnetic disk storage devices, one or more optical storage devices, and/or flash memory (for example, NAND, NOR).

The extension memory 1570 or the internal memory 1504 stores software. A software constituent element includes an Operating System (OS) software module, a communication software module, a graphical software module, a user interface software module, a Moving Picture Experts Group (MPEG) module, a camera software module, one or more application software modules and the like. Also, the module, a software constituent element, can be expressed as a set of instructions. Therefore, the module is also expressed as an instruction set. The module is also expressed as program.

The OS software includes various software constituent elements controlling general system operation. This control of the general system operation represents, for example, memory management and control, storage hardware (device) control and management, power control and management and the like. The OS software performs even a function of making smooth communication between various hardware (devices) and software constituent elements (modules).

The communication software module enables communication with other electronic devices, such as a personal computer, a server and/or a portable terminal and the like, through the RF processor 1540. And, the communication software module is implemented in a protocol structure corresponding to a corresponding communication scheme.

The graphical software module includes various software constituent elements for providing and displaying a graphic on the touch screen 1560. The term 'graphic' is used as meaning including a text, a web page, an icon, a digital image, a video, an animation and the like.

The user interface software module includes various software constituent elements associated with a user interface. The user interface software module includes information about how a state of the user interface is changed, whether the change of the state of the user interface is carried out in which conditions, or the like.

The camera software module includes a camera-related software constituent element enabling camera related processes and functions. The application module includes a web browser including a rendering engine, an electronic mail (e-mail), an instant message, word processing, keyboard emulation, an address book, a touch list, a widget, Digital Right Management (DRM), voice recognition, voice replication, a position determining function, a location based service and the like. The memories 1570 and 1504 can include additional modules (i.e., instructions) besides the above-mentioned modules. Or, the memories 1570 and 1504 may not use some modules (i.e., instructions) according to need. Further to an exemplary embodiment of the present invention, the web browser includes an execution button and selection menu for controlling a display of dynamically changing objects within a web page (FIGS. 3A to 3D).

In accordance with an exemplary embodiment of the present invention, the application module includes instructions for controlling a display of a specific content within a web page (referring to FIGS. 13 and 14 below).

For example, the application module executes a web browser, performs an address search of a corresponding web page and a web page request, receives a source code (e.g., HTML or XML code) of the corresponding web page from a server, parses the source code of the corresponding web page and creates a DOM tree structure, combines the DOM tree structure with a style rule of the web page and creates a render tree structure, performs a layout work of determining a location and size of each render object based on the render tree structure, performs a painting work based on the layouting result, when there are dynamically changing contents within the web page displayed on the screen, records information about the dynamically changing contents within the web page, when there are not the dynamically changing contents within the currently displayed web page, enters a corresponding mode and maintains a state of the currently displayed web page, changes an attribute of an element of a DOM tree or render tree according to the dynamically changing contents of the web page, performs re-layout determining the location and size of an object of the web page to be displayed on the screen based on the changed DOM tree structure or render tree structure, displays the web page including the changed content on the screen according to the re-layout result and, if an event of controlling dynamically changing content occurs, the application module pauses/plays a display of the dynamically changing contents of the web page or performs returning to the previous content of the web page or skipping to the next content of the web page (referring to FIG. 2), according to the event.

According to another example embodiment, the application module executes a web browser and loads a web page, selects a concerned region within the loaded web page. Here, the concerned region being defined to, when the contents of a plurality of objects within the web page are changed, select part of the dynamically changing contents of the plurality of objects and track the changing contents. When there are dynamically changing contents in the concerned region of the web page, the application module records information about the dynamically changing contents within the web page. At this time, the change of content out of the concerned region is not recorded. If there are not the dynamically changing contents within the currently displayed web page, the application module enters a corresponding mode and maintains a state of the currently displayed web page. When an event of controlling dynamically changing contents occurs, that is, when an instruction of pausing (330) / playing (340) a display of the dynamically changing contents is executed, the application module displays or pauses the dynamically changing contents, when the instructions 335 and 345 of returning to the previous content and skipping to the next content are executed, changes a DOM tree structure or render tree structure into a DOM tree structure or render tree structure corresponding to the instruction of returning to the previous content or skipping to the next content based on the recorded information, performs re-layout determining the location and size of an object of the web page to be displayed on the screen based on the changed DOM tree structure or render tree structure, and displays the web page including the changed content on the screen according to the re-layout result. That is, when the content of the web page is changed, the change of the content of the web page is achieved through the insertion / deletion / location modification / attribute change or the like of the objects of the DOM tree or render tree of the web page loaded from the memory.

Also, various functions of the electronic device according to the exemplary embodiments of the present invention mentioned above or to be mentioned below can be executed by hardware including one or more processing and/or ASICs, and/or software, and/or a combination of them.

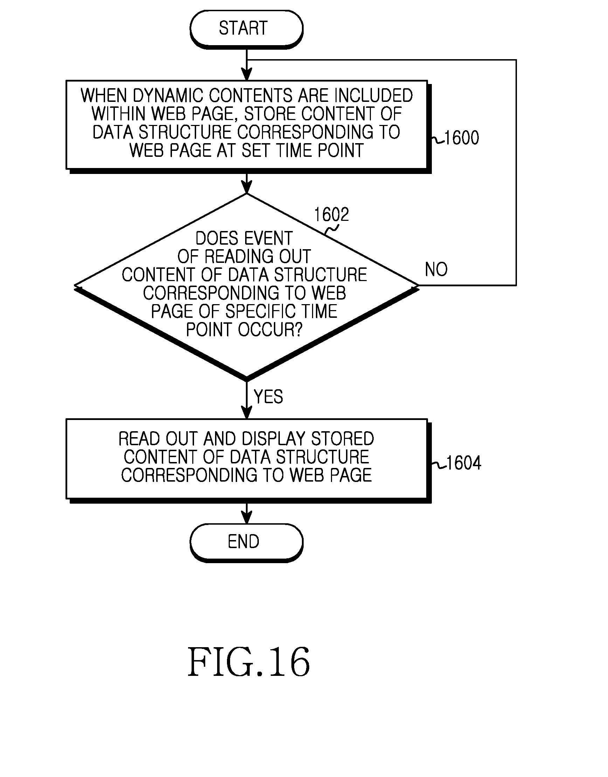

FIG. 16 is a flowchart illustrating a procedure for controlling a display of dynamic contents within a web page according to an embodiment of the present invention.

Referring to FIG. 16, when dynamic contents are included within a web page in step 1600, the electronic device stores the content of a data structure corresponding to the web page at a set time point. Here, the set time point is a predetermined period or a time point at which the dynamic contents are changed. That is, the electronic device can store the changed content of the data structure corresponding to the web page at each time point at which the dynamic contents are changed. In another example embodiment, the electronic device may store the changed content of the data structure corresponding to the web page periodically irrespective of the time point at which the dynamic contents are changed.

Meantime, when storing the content of the data structure corresponding to the web page, the electronic device detects the insertion, deletion, location modification, attribute change, style change or the like of objects within the data structure, and records changed content corresponding to the detection result. Or, when storing the content of the data structure corresponding to the web page, the electronic device may record the whole content of the data structure loaded from a memory.

Next, in step 1602, the electronic device confirms if an event of reading out the content of the data structure corresponding to the web page of a specific time point occurs. When the event of reading out the content of the data structure corresponding to the web page of the specific time point occurs, the electronic device proceeds to step 1604. When the event does not occur, the electronic device returns to step 1600.

In step 1604, the electronic device reads out and displays the stored content of the data structure corresponding to the web page. That is, the electronic device can perform re-layouting and re-painting, based on the stored content of the data structure corresponding to the web page.

Meantime, although not illustrated, when a control event of pausing a display of dynamic contents within the web page occurs, the electronic device pauses a display of the changed content of the dynamic contents within the web page. In other words, the electronic device pauses re-layouting and re-painting for displaying the dynamic contents within the web page. After the control event of pausing the display of the dynamic contents within the web page occurs, the electronic device may release the pausing of the display of the dynamic contents within the web page and read out and display the content of the data structure corresponding to the web page of a current time point. In other words, when releasing the pausing of the display of the dynamic contents within the web page, the electronic device performs re-layouting and re-painting for displaying the dynamic contents within the web page.

As described above, example embodiments of the present invention enable a user to search the dynamically changing contents of a web page by providing a controller for pausing/playing at least some dynamically changing contents of the web page, returning to the previous content of the web page, and skipping to the next content of the web page and the like. Also, the user can easily grasp without missing the dynamically changing contents of the web page.

It will be appreciated that embodiments of the present invention according to the claims and description in the present specification can be realized in the form of hardware, software or a combination of hardware and software. Any such software may be stored in a (e.g. non-transient, volatile or non-volatile) computer readable storage medium. The computer readable storage medium stores one or more programs (e.g. software modules), the one or more programs including instructions, which when executed by one or more processors in an electronic device, cause the electronic device to perform a method according to an exemplary embodiment of the present invention.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs including instructions that, when executed, implement embodiments of the present invention. Accordingly, embodiments provide a program including code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Any of the functions and steps described in the present specification may be implemented in hardware, software or a combination of both and may be performed in whole or in part within the programmed instructions of a computer.

The functions and process steps described herein may be performed automatically or wholly or partially, for example in response to user command. An activity (including a step) performed automatically may be performed in response to executable instruction or device operation without user direct initiation of the activity.

In certain exemplary embodiments, the terms "unit" or "module" referred to herein may be understood as comprising hardware, such as a processor or microprocessor, configured for a certain desired functionality, or a non-transitory medium comprising machine executable code.

Certain exemplary aspects of the present invention provide the following:
A first aspect provides a method of controlling dynamic content, comprising: in response to detecting dynamic content in a web page, storing associated information for displaying the dynamic content in the web page, at a plurality of set time points; pausing updates of the dynamic content; and retrieving and displaying the dynamic content from one of the plurality of set time points using the stored associated information.
A second aspect provides a method according to the first aspect, wherein storing the associated information for displaying the dynamic content comprises at least one of: storing the associated information for displaying the dynamic content periodically according to a predetermined time period, and storing associated information for displaying the dynamic content in response to detecting a change in the dynamic content.
A third aspect provides a method according to the first aspect, further comprising pausing the updates of the dynamic content in response to receiving a pause command.
A fourth aspect provides a method according to the first aspect, further comprising: retrieving the dynamic content based on a content back command for display, wherein the dynamic content that is retrieved and displayed is associated with an earlier set time point, relative to a current set time point.
A fifth aspect provides a method according to the first aspect, further comprising: retrieving the dynamic content based on a content forward command for display, wherein the dynamic content displayed is associated with a later set time point, relative to a current set time point.
A sixth aspect provides a method according to the first aspect, further comprising: resuming the display of the dynamic content, in response to a resume command.
A seventh aspect provides a method according to the first aspect, further comprising: in response to the detecting the dynamic content in the web page, displaying as a portion of a graphical user interface a pause command button configured to trigger the pause command.
An eight aspect provides a method according to the seventh aspect, further comprising replacing the pause command button with a content back button, a content forward button and a resume button, in response to detecting the pause command triggered by the pause button.
A ninth aspect provides a method according to the first aspect, wherein pausing the updates of the dynamic content comprises: halting layout and painting processes that generate the dynamic content.
A tenth aspect provides a method according to the ninth aspect, wherein displaying the dynamic content comprises: altering at least one data structure using the stored associated information for displaying the dynamic content from the one of the plurality of set time points; and resuming the layout and painting processes utilizing the associated information.
An eleventh aspect provides a method according to the tenth aspect, wherein the data structure comprises at least one of: a document object model tree structure, and a render tree structure.
A twelfth aspect provides a method according to the first aspect, further comprising: receiving an indicator of a desired region of the web page; and storing associated information for displaying the dynamic content at a plurality of set time points only for the desired region.
A thirteenth aspect provides an electronic device for controlling dynamic content, comprising: a display configured to display a web page containing the dynamic content; and a processor configured to: in response to detecting the dynamic content in the web page, store associated information for displaying the dynamic content on a screen, at a plurality of set time points; and pause updates of the dynamic content; and retrieve and display the dynamic content from one of the plurality of set time points using the associated information.
A fourteenth aspect provides an electronic device according to the thirteenth aspect, wherein storing the dynamic content comprises at least one of: storing associated information for displaying the dynamic content periodically according to a predetermined time period, and storing associated information for displaying the dynamic content in response to detecting a change in the dynamic content.
A fifteenth aspect provides an electronic device according to the thirteenth aspect, the processor further configured to pause the updates of the dynamic content in response to receiving a pause command.
A sixteenth aspect provides an electronic device according to the thirteenth aspect, the processor further configured to: retrieve and display the dynamic content based on a content back command, wherein: the dynamic content that is retrieved and displayed is associated with an earlier set time point, relative to a current set time point.
A seventeenth aspect provides an electronic device according to the thirteenth aspect, the processor further configured to: retrieve and display the dynamic content based on a content forward command, wherein: the dynamic content that is retrieved and displayed is associated with a later set time point, relative to a current set time point.
An eighteenth aspect provides an electronic device according to the thirteenth aspect, the processor further configured to: resume the display of the dynamic content, in response to a resume command.
A nineteenth aspect provides an electronic device according to the thirteenth aspect, the processor further configured to: in response to the detecting the dynamic content in the web page, display as portion of a graphical user interface a pause command button configured to trigger a pause command.
A twentieth aspect provides an electronic device according to the nineteenth aspect, the processor further configured to: replace the pause command button with a content back button, a content forward button and a resume button, in response to detecting the pause command triggered by the pause button.
A twenty first aspect provides an electronic device according to the thirteenth aspect, wherein pausing the updates of the dynamic content comprises halting layout and painting processes that generate the dynamic content.
A twenty second aspect provides an electronic device according to the twenty first aspect, wherein displaying the portion of the dynamic content comprises: altering at least one data structure using the associated information of the dynamic content from the one of the plurality of set time points; and resuming the layout and painting processes utilizing the associated information.
A twenty third aspect provides an electronic device according to the twenty second aspect, wherein the data structure comprises at least one of: a document object model tree structure, and a render tree structure.
A twenty fourth aspect provides an electronic device according to the thirteenth aspect, the processor further configured to: receive an indicator of a desired region of the web page; and store associated information for displaying the dynamic content at a plurality of set time points only for the desired region.

Furthermore, certain exemplary embodiments of the present invention provide the following:
Certain exemplary embodiments provide a method for displaying a specific content within a web page in an electronic device, the method comprising the operations of: in accordance with a 1st instruction of a web browser, receiving a request for a display of a specific content within a currently displayed web page, a data structure for rendering the web page being stored in a memory; and displaying the web page comprising the specific content, using the changed content of the data structure corresponding to the web page comprising the specific content.
In certain exemplary embodiments, the operation of receiving the request for the display of the specific content within the currently displayed web page searches the changed content of the data structure corresponding to the web page comprising the specific content.
In certain exemplary embodiments, the method includes the operation of, in accordance with a 2nd instruction of the web browser, resuming a stopped dynamic contents change operation within the web page comprising the specific content.
In certain exemplary embodiments, the operation of resuming the stopped dynamic contents change operation performs re-layout and re-painting of the data structure, in consideration of the changed content of the data structure for rendering a web page comprising other contents changing.
In certain exemplary embodiments, the method includes the operation of, before the 1st instruction of the web browser is executed, stopping a dynamic contents change operation in accordance with a 3rd instruction of the web browser, the changed content of the data structure for rendering a web page comprising currently changing contents being stored in the memory.
In certain exemplary embodiments, the operation of stopping the dynamic contents change operation stops re-layout and re-painting irrespective of the changed content of the data structure for rendering the web page comprising the currently changing contents.
In certain exemplary embodiments, when the 3rd instruction of the web browser is activated, the 1st instruction of the web browser is inactivated, and when the 1st instruction of the web browser is activated, the 3rd instruction of the web browser is inactivated.
In certain exemplary embodiments, the method includes the operation of storing the changed content of the data structure in the memory, the operation of storing comprises the operations of: sensing the insertion / deletion / location modification / style change of an object within the data structure corresponding to the changed content; and recording the changed content of the object within the data structure.
In certain exemplary embodiments, the method includes further comprising the operation of selecting a specific region of the web page after the operation of displaying the web page, the changed content is the changed content of the specific region.
In certain exemplary embodiments, the data structure is one of a data structure of a Document Object Model (DOM) tree format and a data structure of a render tree format.
Certain exemplary embodiments provide an electronic device comprising: one or more processors for executing computer programs; a memory for storing data and instructions; and one or more programs stored in the memory and configured to be executed by the one or more processors, wherein the program comprises instructions of: in accordance with a 1st instruction of a web browser, receiving a request for a display of a specific content within a currently displayed web page, a data structure for rendering the web page being stored in a memory; and displaying the web page comprising the specific content, using the changed content of the data structure corresponding to the web page comprising the specific content.
In certain exemplary embodiments, the instruction of receiving the request for the display of the specific content within the currently displayed web page searches the changed content of the data structure corresponding to the web page comprising the specific content.
In certain exemplary embodiments, the program further includes an instruction of, in accordance with a 2nd instruction of the web browser, resuming a stopped dynamic contents change operation within the web page comprising the specific content.
In certain exemplary embodiments, the instruction of resuming the stopped dynamic contents change operation performs re-layout and re-painting of the data structure, in consideration of the changed content of the data structure for rendering a web page comprising other contents changing.
In certain exemplary embodiments, the program further includes an instruction of, before the 1st instruction of the web browser is executed, stopping a dynamic contents change operation in accordance with a 3rd instruction of the web browser, the changed content of the data structure for rendering a web page comprising currently changing contents being stored in the memory.
In certain exemplary embodiments, the instruction of stopping the dynamic contents change operation stops re-layout and re-painting irrespective of the changed content of the data structure for rendering the web page comprising the currently changing contents.
In certain exemplary embodiments, when the 3rd instruction of the web browser is activated, the 1st instruction of the web browser is inactivated, and when the 1st instruction of the web browser is activated, the 3rd instruction of the web browser is inactivated.
In certain exemplary embodiments, the program further includes an instruction of storing the changed content of the data structure in the memory, wherein the instruction of storing comprises instructions of: sensing the insertion / deletion / location modification / style change of an object within the data structure corresponding to the changed content; and recording the changed content of the object within the data structure.
In certain exemplary embodiments, the program further includes an instruction of selecting a specific region of the web page after the operation of displaying the web page, wherein the changed content is the changed content of the specific region.
In certain exemplary embodiments, the data structure is one of a data structure of a Document Object Model (DOM) tree format and a data structure of a render tree format.

While the invention has been shown and described with reference to certain example embodiments thereof, it will be understood by those skilled in the art that various changes in form and details may be made therein without departing from the scope of the present invention, as defined by the appended claims.

## Claims

1. A method of controlling dynamic content, comprising:
in response to detecting dynamic content in a web page, storing associated information for displaying the dynamic content in the web page, at a plurality of set time points;
pausing updates of the dynamic content; and
retrieving and displaying the dynamic content from one of the plurality of set time points using the stored associated information.

2. The method of claim 1,
wherein storing the associated information for displaying the dynamic content comprises at least one of:
storing the associated information for displaying the dynamic content periodically according to a predetermined time period, and
storing associated information for displaying the dynamic content in response to detecting a change in the dynamic content.

3. The method of claim 1, further comprising pausing the updates of the dynamic content in response to receiving a pause command.

4. The method of claim 1 or 2, further comprising:
retrieving the dynamic content based on a content back command for display, wherein the dynamic content that is retrieved and displayed is associated with an earlier set time point, relative to a current set time point.

5. The method of claim 1, 2 or 3, further comprising:
retrieving the dynamic content based on a content forward command for display, wherein the dynamic content displayed is associated with a later set time point, relative to a current set time point.

6. The method of any preceding claim, further comprising:
resuming the display of the dynamic content, in response to a resume command.

7. The method of any preceding claim, wherein displaying the dynamic content comprises:
altering at least one data structure using the stored associated information for displaying the dynamic content from the one of the plurality of set time points; and
resuming the layout and painting processes utilizing the associated information.

8. The method of claim 7, wherein the data structure comprises at least one of: a document object model tree structure, and a render tree structure.

9. The method of any preceding claim comprising the further operations of:
in accordance with a 1st instruction of a web browser, receiving a request for a display of a specific content within a currently displayed web page,
a data structure for rendering the web page being stored in a memory; and
displaying the web page comprising the specific content, using the changed content of the data structure corresponding to the web page comprising the specific content.

10. The method of claim 9, further comprising the operation of, in accordance with a 2nd instruction of the web browser, resuming a stopped dynamic contents change operation within the web page comprising the specific content.

11. The method of claim 9 or 10, further comprising the operation of, before the 1st instruction of the web browser is executed, stopping a dynamic contents change operation in accordance with a 3rd instruction of the web browser,
the changed content of the data structure for rendering a web page comprising currently changing contents being stored in the memory.

12. The method of claim 9, 10 or 11, further comprising the operation of, before the 1st instruction of the web browser is executed, stopping a dynamic contents change operation in accordance with a 3rd instruction of the web browser,
the changed content of the data structure for rendering a web page comprising currently changing contents being stored in the memory.

13. The method of any of claims 9 to 12, further comprising the operation of storing the changed content of the data structure in the memory,
wherein the operation of storing comprises the operations of:
sensing the insertion / deletion / location modification / style change of an object within the data structure corresponding to the changed content; and
recording the changed content of the object within the data structure.

14. The method of any of claims 9 to 13, further comprising the operation of selecting a specific region of the web page after the operation of displaying the web page,
wherein the changed content is the changed content of the specific region.

15. An electronic device, comprising:
one or more processors;
a memory; and
one or more programs, wherein the one or more programs are stored in the memory and configured to cause, when executed by the electronic device, the electronic device to perform the method of any of claims 1 to 14.
